(19) **Europäisches Patentamt**
**European Patent Office**
**Office européen des brevets**

(11) **EP 2 998 879 B1**

(12) **EUROPEAN PATENT SPECIFICATION**

(45) Date of publication and mention
of the grant of the patent:
**01.11.2017  Bulletin 2017/44**

(51) Int Cl.:
***G06F 17/30*** *(2006.01)*　　　***H04W 4/02*** *(2009.01)*
***H04W 4/08*** *(2009.01)*　　　*G01S 5/00* *(2006.01)*
***H04W 4/04*** *(2009.01)*

(21) Application number: **13884565.6**

(22) Date of filing: **14.05.2013**

(86) International application number:
**PCT/JP2013/063378**

(87) International publication number:
**WO 2014/184862 (20.11.2014 Gazette 2014/47)**

(54) **GROUPING APPARATUS, SYSTEM, METHOD, AND PROGRAM**

VORRICHTUNG, SYSTEM, VERFAHREN UND PROGRAMM ZUR GRUPPIERUNG

DISPOSITIF, SYSTÈME, PROCÉDÉ, ET PROGRAMME DE GROUPEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2016  Bulletin 2016/12**

(73) Proprietor: **Fujitsu Limited
Kawasaki-shi, Kanagawa 211-8588 (JP)**

(72) Inventors:
• **YAMAOKA, Hisatoshi
Kawasaki-shi
Kanagawa 211-8588 (JP)**

• **OKABAYASHI, Miwa
Kawasaki-shi
Kanagawa 211-8588 (JP)**
• **HADA, Yoshiro
Kawasaki-shi
Kanagawa 211-8588 (JP)**

(74) Representative: **Hutchison, James
Haseltine Lake LLP
300 High Holborn
London, Greater London WC1V 7JH (GB)**

(56) References cited:
JP-A- 2010 072 691　　JP-A- 2011 134 225
JP-A- 2012 103 963　　US-A1- 2011 021 214
US-A1- 2012 149 309　　US-A1- 2013 080 457

**Description**

Technical Field

The embodiments discussed herein relate to a grouping apparatus, a grouping method, and a grouping program.

Background Art

There may be a need for grouping of information provided with position information. In this case, an advertisement that is displayed on an advertising sign arranged in a certain position and information needed for operating, for example, a type of a personal computer (PC) or PC peripheral equipment in the wireless LAN environment may be examples of "information provided with position information". "Grouping" of these pieces of information refers to putting together into one group a plurality of pieces of information provided with different pieces of position information.

For example, consider the case in which, for a series of advertisements having several types of design, a plurality of advertising signs are created for each design. A purpose of placing an advertising sign is to make an impact on a person who look at the advertising sign, that is, to provide an advertising effectiveness, so it is important to determine how to arrange the advertisement of each design. In other words, when arranging the advertisements having the same design in different positions, these advertisements may be referred to as grouped advertisements.

Further, consider that a plurality of information devices such as a PC and a printer are placed indoors, and that processing is performed that includes selecting, from among this group of information devices, a group of devices that are easily accessed from the location of a user and powering up the devices in advance. In this case, the information on the address that specifies a group of accessible devices corresponds to "grouped pieces of information". Performing such processing permits a user of information devices to use the information devices without moving closer to the devices to power up for himself/herself.

A content data management device for managing content data that obtains, by use of the position and time that are tagged in two pieces of data from among a plurality of pieces of content data, a speed of movement between two positions in which two pieces of content data have been created and performs grouping of content data on the basis of the speed is known. For example, for image data, the speed refers to an average speed of movement when a person who captures images moves between the positions in which two images are captured. For image data, the "speed" includes the information on by which moving means the person moved to acquire a plurality of images, for example, moving by walk, moving by a car, or moving by a train. Grouping the images acquired by moving by sets of moving means whose speed is identical or similar may result in grouping more relevant pieces of content data.

Patent Document 1: Japanese Laid-open Patent Publication No. 2012-103963

US2013080457 (A1) discloses one or more mobile devices making measurements while moving along a path. Each measurement may comprise a specific group of identifiers of wireless transmitters, and strengths of corresponding wireless signals. A set of measurements are made in a sequence along a path, and the subsets of the measurements are identified for satisfying a test on a value of a measure of similarity of measurements included in the subset. A new place of relevance is identified, by comparing the just-described subsets of the measurements with similar subsets of additional measurements (e.g. by clustering). Alternatively, a known place of relevance (e.g. having a label) is identified, by comparing the just-described subsets of the measurements with pre-computed model of measurements. Also, the just-described subsets of the measurements may be compared with corresponding subsets of measurements of another path, e.g. to identify common portions therein.

US2012149309 (A1) discloses an approach for enabling computing devices to establish and recognize a relationship group based on physical proximity. A proximity management platform monitors a plurality of activities of a mobile device. The monitored activities include communications with one or more devices within a predetermined proximity of the mobile device. The proximity management platform stores the monitored activities and associated timing information.

US2011021214 (A1) discloses a portable telephone information visualizing device which includes: grouping means that, based on at least one item of information from among space, time, speed, information associated with the individual identification number of the portable telephone terminals, and status information indicating the state of the portable telephone terminals, performs grouping of information of each portable telephone terminal belonging to a common carrier of portable telephone terminals, and means that creates display data for visualising the number of constituents of a group that has undergone this grouping, the movement of this group, and the relation between this group and a group other than this group.

Disclosure of Invention

The present invention is defined by the appended independent claims, to which reference should now be made. Specific embodiments are defined in the dependent claims.

When grouping advertising signs, there is a possibility that the classification based on a real situation is not performed for the following reasons when only taking into account positions and directions of advertising signs. In other words, for example, signs that stand closely to one another facing in the same direction may have an advertising effectiveness significantly different from one another depending on the moving patterns of people or the spatial structure around them. Even if a classification is performed using a route distance instead of a direct distance, it is still difficult to perform a classification based on a real situation. In order to accurately conduct real-situation researches on an advertising effectiveness, behavioral patterns of people and a spatial structure also need to be considered when classifying signs.

Consider that a plurality of information devices such as a PC and a printer are placed indoors, and that processing is performed that includes selecting, from among this group of information devices, a group of devices that are easily accessed by a person in a certain location and powering up the devices in advance. In this case, the devices adjacent to one another across the wall may be powered up when a group of devices simply grouped by use of a direct distance is turned ON. If a route distance is used, grouping may be performed according to different criteria than the accessibility of people, depending on the relationship between the positions of the devices.

Accordingly, in one aspect, an object of the present invention is to provide a grouping apparatus, a grouping method, and a grouping program that group a plurality of pieces of information so as to improve the efficiency of an information transmission to a moving body.

A grouping apparatus is provided. The grouping apparatus includes a relationship calculation unit that calculates, at a plurality of times between a first time and a second time, the strength of correlation between each of a plurality of pieces of information and a moving body as a level of relationship for each of the plurality of pieces of information, wherein each of the plurality of pieces of information is provided to each of a plurality of objects arranged in a space and the moving body moves within the space, a similarity calculation unit that, on the basis of the level of relationship for each of the plurality of objects calculated at the plurality of times, calculates similarities for all pairs of the plurality of pieces of information at the plurality of times, integrates the similarities for all pairs of the plurality of pieces of information at the plurality of times, and calculates integrated similarity, and a classification unit that groups the plurality of pieces of information on the basis of the integrated similarity.

According to an aspect of the embodiments, a plurality of pieces of information can be grouped so as to improve the efficiency of an information transmission to a moving body.

Brief Description of Drawings

FIG. 1 illustrates an example of grouping of information based on a direct distance between the positions of pieces of information;
FIG. 2 illustrates an example of grouping of information based on a route distance between the positions of pieces of information;
FIG. 3 illustrates an example of grouping of information based on the sections to which the positions of pieces of information belong;
FIG. 4 illustrates an example of natural grouping of information;
FIG. 5A illustrates examples of pieces of information to be discriminated when natural grouping of information is performed;
FIG. 5B illustrates examples of pieces of information to be put together when natural grouping of information is performed;
FIG. 6 illustrates an example of a state in which natural grouping of information is used;
FIG. 7 illustrates another example of a state in which natural grouping of information is used;
FIG. 8 is a functional block diagram that illustrates an example of a grouping apparatus according to an embodiment;
FIG. 9A is a graph that illustrates an example of a relationship between a moving body and an object that depends on an inverse of distances;
FIG. 9B is a graph that illustrates another example of a relationship between a moving body and an object that depends on an inverse of distances;
FIG. 10A is a graph that illustrates an example of a relationship between a moving body and an object that linearly depends on a distance;
FIG. 10B is a graph that illustrates another example of a relationship between a moving body and an object that linearly depends on a distance;
FIG. 11 is a graph that illustrates a relationship between a moving body and an object using a nearest-neighbor model;
FIG. 12 illustrates an outline of a nearest-neighbor model;
FIG. 13 illustrates an example of a neighborhood that changes in conjunction with a movement of a person;
FIG. 14 illustrates an example of a relationship between a range visible to a moving body and a sign;

FIG. 15 is a table that illustrates an example of a set of integrated similarities;

FIG. 16 illustrates an example of a relationship graph that is created using the set of integrated similarities illustrated in FIG. 15;

FIG. 17 is a graph that illustrates another example of a set of integrated similarities;

FIG. 18 illustrates an example of a dendrogram that is created using the set of integrated similarities illustrated in FIG. 17;

FIG. 19A illustrates an example of natural grouping of information using a nearest-neighbor model;

FIG. 19B illustrates another example of natural grouping of information using the nearest-neighbor model;

FIG. 20 illustrates an example of a result of grouping of information using a nearest-neighbor model with potential;

FIG. 21 is illustrates an example of a configuration of a grouping apparatus; and

FIG. 22 is a flowchart that illustrates an example of a processing flow of grouping.

Preferred Embodiments

A grouping apparatus and a grouping method according to an embodiment will now be described with reference to the drawings.

<General Description>

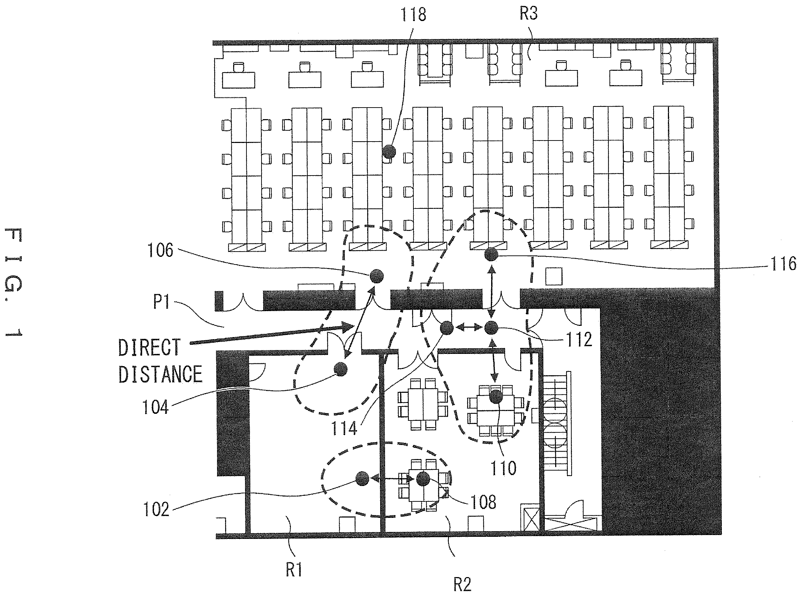

First, referring to FIGS. 1 to 5, grouping of information provided with position information will be described.

In this case, "information provided with position information" may be information that is arranged in a position in a three-dimensional space that is a living space of a person. A personal computer (PC) or PC peripheral equipment in the wireless LAN environment of advertisements, sounds, and images are examples of such information. "Grouping" of such information indicates a distribution of a plurality of pieces of information provided with different pieces of position information to a plurality of groups.

For example, consider that a plurality of information devices such as a PC and a printer are placed indoors, and that processing is performed that includes selecting, from among this group of information devices, a group of devices that are easily accessed by a person in a certain location and powering up the devices in advance. Each information device has information provided with position information. For example, each information device has information such as an IP address and a MAC address that identifies itself, and configures "information provided with position information" by combining its information with the information on the position in which the information device is placed.

In this case, "group of easily accessible devices" corresponds to grouped information devices. Performing such processing permits a user of information devices to use the information devices without moving closer to the devices to power up for himself/herself.

Further, "information" may be, for example, content data such as image data, audio data, and text data that are stored in an information recording medium as an electronic file.

First, referring to FIGS. 1 to 7, a concept of "natural" grouping of information provided with position information will be described.

FIG. 1 illustrates an example of grouping of information based on a direct distance between the positions of pieces of information.

An office illustrated in FIG. 1 includes rooms R1, R2, and R3, and a passage P1. Information devices 102 and 104 are arranged in the room R1. Information devices 108 and 110 are arranged in the room R2. Information devices 106 and 118 are arranged in the room R3. Information 112 and 114 are arranged in the passage P1.

In FIG. 1, whether two devices are to be grouped is determined depending on a direct distance between those information devices. In this case, the direct distance between the information devices is not blocked by a wall in the room. In other words, a distance between two information devices that are arranged across the wall from each other is a length of a line that passes through the wall to connect the two information devices. Then, when the direct distance that connects the two devices is not greater than a predetermined value, those two information devices are grouped into the same group (grouping) . In the example of FIG. 1, the following three groups are formed:

Group A: information device 104 (room R1), information device 106 (room R3)

Group B: information device 102 (room R1), information device 108 (room R2)

Group C: information device 112 (passage R1), information device 114 (passage P1), information device 110 (room R2), and information device 116 (room R3)

The information devices 102 and 108 that belong to Group 2 above are arranged in different rooms, and the direct distance between them goes through a wall. Even if a communication between information devices is wireless, there may be a great attenuation of signal intensity depending on the structure of the wall when going through a wall, so it is difficult to consider classifying the information devices 102 and 108 into the same group as "natural" grouping. Thus, there is a possibility that grouping by use of a direct distance between information devices is not "natural".

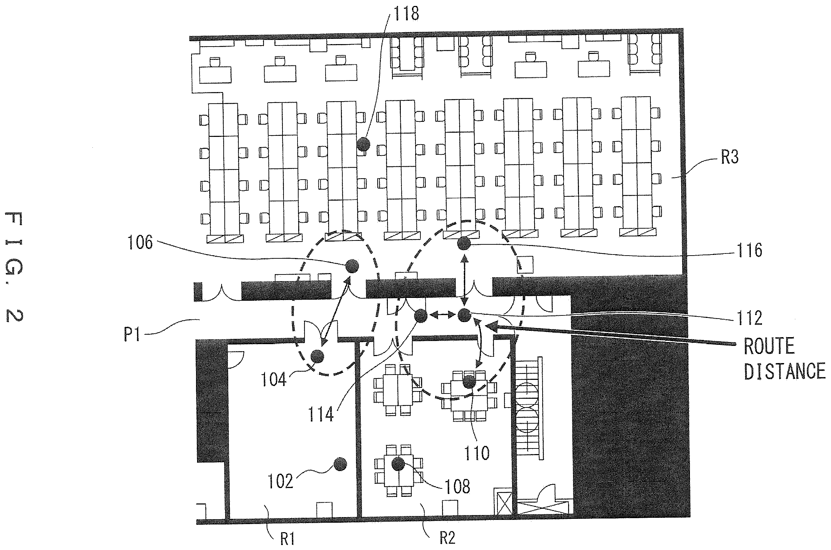

FIG. 2 illustrates an example of grouping of information based on a route distance between the positions of pieces of information.

In FIG. 2, a distance between two information devices is measured using a route distance. In this case, "route distance" is defined by a distance along a flow line of a person.

When grouping on the basis of a route distance, the following two groups are formed:

Group D: information device 104 (room R1), information device 106 (room R3)
Group E: information device 112 (passage P1), information device 114 (passage R1), information device 110 (room R2), information device 116 (room R3)

In this case, the route distance between the information device 102 (room R1) and the information device 108 (room R2) of Group B passes through the passage P1, and is not small enough for the information devices 102 and 108 to be grouped. The information devices 104 and 106 are arranged in the rooms R1 and R3, respectively, but the route distance between them is not so different from the direct distance between them. Thus, the information devices 104 and 106 are also grouped when it is determined whether they are to be grouped depending on the route distance.

As described above, when grouping on the basis of the route distance, the information devices arranged in the different rooms are also put together into the same group. Thus, there is a possibility that grouping by use of a route distance between information devices is not "natural".

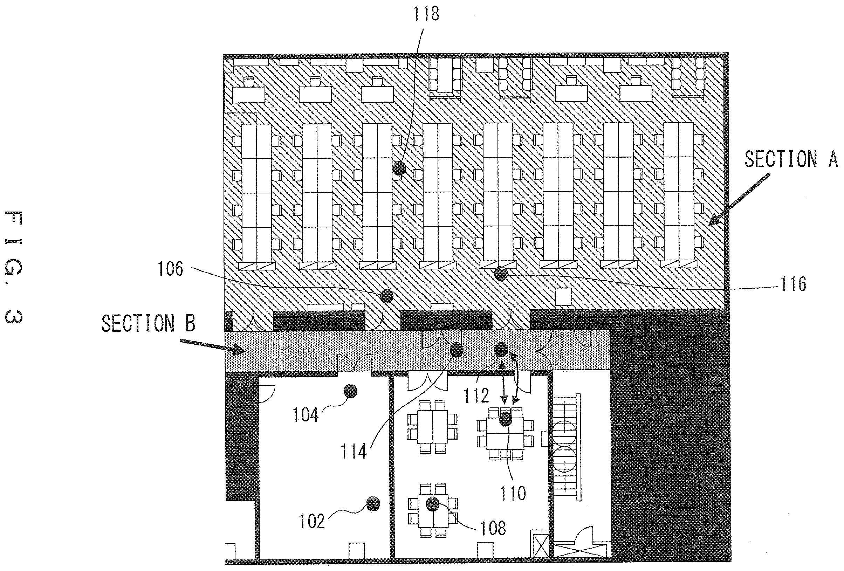

FIG. 3 illustrates an example of grouping of information based on the sections to which the positions of pieces of information belong.

In FIG. 3 illustrates sections A and B, and information devices in the respect sections are considered to be one group.

Group F (section A): information device 106, information device 116, and information device 118
Group G (section B) : information device 110, and information device 114

When performing grouping for each of the predetermined sections in this way, an additional work will be needed for classification and the method for determining a section may have arbitrariness.

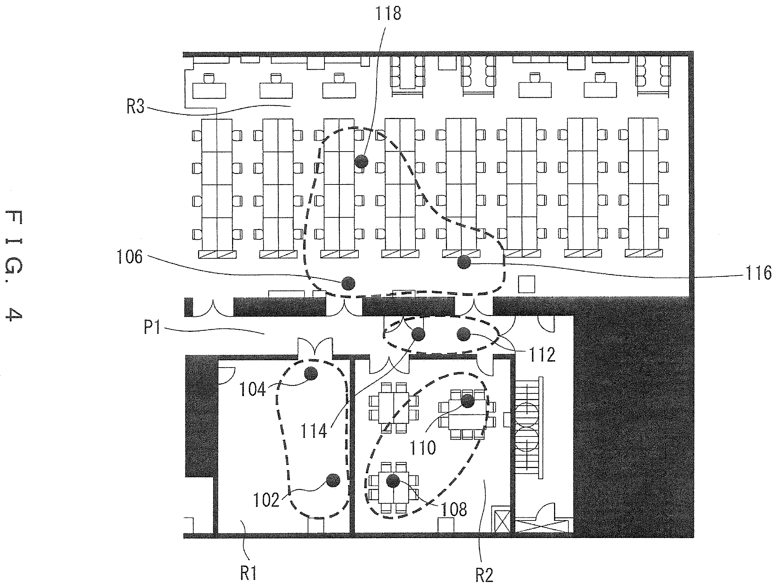

FIG. 4 illustrates an example of "natural" grouping of information.

In FIG. 4, the following four groups are formed:

Group H (room R1): information device 102, and information device 104
Group I (room R2) : information device 108, and information device 110
Group J (passage P1): information device 112, and information device 114
Group K (room R3): information device 106, information device 116, and information device 118

In this case, the information devices to be grouped are in the same room, and there is not any wall between the information devices. Further, the route distances from one another are short because the information devices to be grouped are arranged in the same room.

Classifying according to a distance between information devices is not sufficient in order to perform natural grouping as illustrated in FIG. 4. When a plurality of information devices such as a PC and a printer are placed indoors, and when processing is performed that includes selecting, from among this group of information devices, a group of devices that are easily accessed by a person in a certain location and powering up the devices in advance, the devices adjacent to one another across the wall may be powered up when a group of devices grouped by use of a simple distance is turned ON. If a route distance is used, grouping may be performed according to different criteria than the accessibility of a person, depending on the relationship between the positions of the devices, which results in inefficiency.

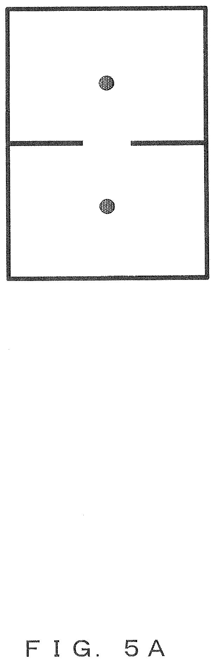

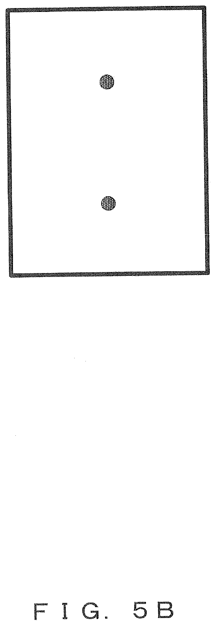

FIG. 5A illustrates examples of pieces of information to be discriminated when natural grouping of information is performed, and FIG. 5B illustrates examples of pieces of information to be put together when natural grouping of information is performed.

In FIG. 5A, there are two sections, and one object is arranged in each of the sections. In FIG. 5B, two objects are arranged in one section. Pieces of information of FIG. 5A that are provided to the two objects belong to different groups and pieces of information of FIG. 5B provided to the two objects belong to the same group. As described above, when performing "natural grouping", not only the distance between pieces of information but also the structure of the space in which objects provided with pieces of information are arranged, such as an obstacle, is to be considered.

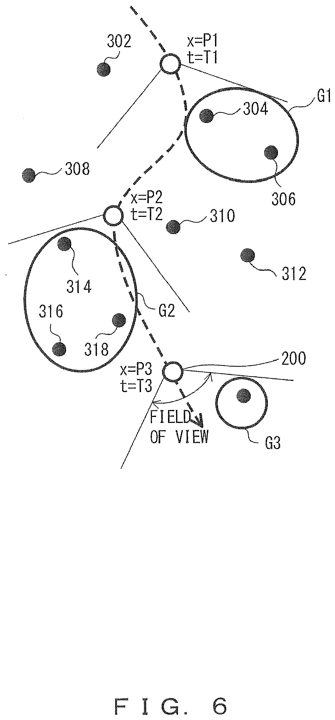

FIG. 6 illustrates an example of a state in which natural grouping of information is used.

FIG. 6 illustrates an example of grouping of advertisement. In this example, "information" is a design of advertisement.

It is assumed that, for a series of advertisements having several types of design, there are a plurality of advertising signs for each design. "Information provided with position information" may be a design of advertisement that is provided with the information about the position of the advertising sign.

For the plurality of advertising signs, the advertising signs that are provided with the advertisements having a similar advertising effectiveness to one another may be placed in one group. The advertising effectiveness may be an impact that is made on a person who looks at the advertising sign. Advertisements having the same design correspond to "grouped pieces of information". A purpose of placing an advertising sign is to make an impact on a person who looks at the advertising sign, so it is important to determine how to arrange advertising signs having the same design.

In FIG. 6, advertising signs 302, 304, 306, 308, 310, 312, 314, 316, 318, and 320 are arranged in a certain space. The advertisements provided to these advertising signs are divided into one or more groups so as to increase the advertising effectiveness.

A dotted line indicates a trajectory of a moving body 200 that moves in the space in which the advertising signs are arranged. The moving body 200 can be a person, a vehicle, or anything that moves recognizing the advertisements provided to the advertising signs. When the moving body is a vehicle, the advertisements may be traffic signs.

In FIG. 6, the moving body 200 is in a position x=P1 at a time t=T1. Close to the position x=P1, there are the pieces of information provided to the advertising signs 302, 304, and 306. In this case, "close to a certain position" may be defined as a distance being not greater than a predetermined value. Further, when a potential model is used, as described below, if a difference between the levels of potential is not greater than a predetermined value (first threshold), the two may be defined as close. Furthermore, these advertising signs 302, 304, and 306 have distances not greater than a predetermined value (second threshold) from one another.

A moving body is able to recognize an advertisement provided to an advertising sign that is included within its field of view. For example, the moving body is able to recognize the advertisements provided to the advertising signs 304 and 306 at the time t=T1. Thus, when performing natural grouping of information, the information, that is, the advertisement provided to the advertising sign 304, and the advertisement provided to the advertising sign 306 are grouped.

Further, the moving body 200 is in the position x=P2 at the time t=T2. When the moving body 200 that was in the position x=P1 at the time t=T1 arrives at the position x=P2, the advertising signs that are included within the field of view of the moving body and whose distance from the moving body 200 is less than a predetermined value are the advertising signs 314, 316, and 318. Further, the advertisements provided to the advertising signs 314, 316, and 318 have distances not greater than the predetermined value (second threshold) from one another. Thus, when performing natural grouping of information, the advertisements provided to these advertising signs 314, 316, and 318 are grouped.

In FIG. 6, the moving body 200 has moved to the position x=P3 at the time t=T3. At that time, the advertising sign that is included within the field of view of the moving body and whose distance from the moving body is less than a predetermined value is the advertising sign 320. Thus, the advertising sign 320 forms a group G3.

As described above, it may be important to consider the movement of an information recipient when performing natural grouping of information. In other words, it is preferable to group pieces of information whose level of accessibility at the same time is similar as much as possible. Further, it is preferable to group pieces of information that are correlated with the information user as long as possible.

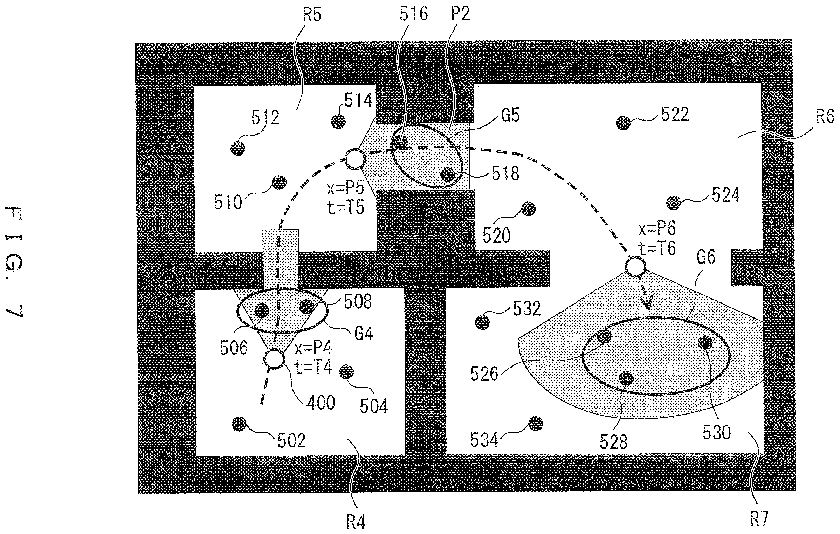

FIG. 7 illustrates another example of a state in which natural grouping of information is used. In FIG. 7, advertising signs 502 to 534 are arranged. Further, the space in which the advertising signs 502 to 530 are arranged are divided into several sections, that is, rooms R4, R5, R6, and R7, using walls. In the room R4, the four advertising signs 502, 504, 506, and 508 are arranged. In the room R5, the three advertising signs 510, 512, and 514 are arranged. In a passage P2 that connects the rooms R5 and R6, the two advertising signs 516 and 518 are arranged. In the room R6, the three advertising signs 520, 522, and 524 are arranged, and in the room R7, the five advertising signs 526, 528, 530, 531, and 534 are arranged. In the example illustrated in FIG. 7, there are walls in the space in which the advertising signs are arranged, and the space is divided. Here, it is assumed that the walls are opaque and that a moving body 400 (person) is not able to confirm visually through the walls. Each of the advertising signs is provided with an advertisement.

The moving body 400 is in the position x=P4 at the time t=T4. At that time, the advertising signs that are included within the field of view of the moving body 400 and whose distance from the moving body 400 is less than the predetermined value (first threshold) are the advertisements provided to the advertising signs 506 and 508. Further, a distance between the advertisements provided to the advertising signs 506 and 508 is not greater than the predetermined value (second threshold) from each other. Thus, when performing natural grouping of information, the information provided to these advertising signs 506 and 508 are grouped.

When the moving body 400 that was in the position x=P4 at the time t=T4 has moved to the position x=P5 at the time T5. At that time, the advertisements that are included within the field of view of the moving body 400 and whose distance from the moving body 400 is less than the predetermined value (first threshold) are the advertisements provided to the advertising signs 516 and 518 arranged in the passage P2. Further, the distance between the advertisement provided to the advertising sign 516 and the advertisement provided to the advertising sign 518 is less than the predetermined value (second threshold). Thus, when performing natural grouping of information, the information provided to these advertising signs 516 and 518 are grouped.

When the moving body 400 that was in the position x=P5 at the time t=T5 has moved to the position x=P6 at the time T6. At that time, the advertising signs that are included within the field of view of the moving body 400 and whose distance from the moving body 400 is less than the predetermined value (first threshold) are the advertising signs 526, 528 and 530. The advertisement provided to the advertising signs 534 is included in the field of view but whose distance from the moving body 400 is greater than the predetermined value (first threshold) . Further, the advertisements provided to the advertising signs 526, 528, and 530 have a distance less than the predetermined value (second threshold) from one another. Thus, when performing natural grouping of information, the information provided to these advertising signs 526, 528, and 530 are grouped.

As described above, when grouping advertising signs that have a similar advertising effectiveness to one another in order to conduct researches on an advertising effectiveness of a plurality of advertising signs, there is a possibility that the classification based on a real situation is not performed when only taking into account positions and directions of advertising signs. For example, signs that stand closely to one another facing in the same direction may have an advertising effectiveness significantly different from one another depending on the moving patterns of people or the spatial structure around them. Even if a classification is performed using a route distance instead of a direct distance, it is still difficult to perform a classification based on a real situation. In order to accurately conduct real-situation researches on an advertising effectiveness, the behavioral pattern of a person who is a target of the advertisement and the spatial structure also need to be considered when classifying signs.

"Natural grouping of information" is related to the accessibility of an information user to information at the same time. In this case, the accessibility to information is related to an amount of additional movements to be performed by a user or a recipient of the information in order to access the information. The movement of people or vehicles has inertia, and their heading direction is often the same as the center of their field of view. On the other hand, a large additional movement may be needed when suddenly changing directions or when looking at a direction that is different from the heading direction. Further, the access is easier if a distance between a moving body and an object provided with information is shorter. The reason that the accessibility to information at the same time is important is that an information user (recipient) may be in different locations at different times, and it is not easy for the user to associate the pieces of information that were recognized in the different locations at the different times.

In this case, when the information is an advertisement and the user is a person, for example, a "user accesses information" may refer to the state in which the advertisement is included in the field of view of that person. Further, in the wireless LAN environment when the information is a printer and the user is a PC user, it may refer to the state in which the printer operates according to the instructions from the PC.

Further, when performing "natural grouping of information", the accessibility of a user (moving body) to a plurality of pieces of information at a certain time is considered. The equality of the accessibility of a user to a plurality of pieces of information at a certain time may be referred to as "simultaneity of the accessibility to information". For example, the accessibility can be determined only using the distance between an information user and information provided to an object, that is, the distance between the user and the object. For example, consider that an object A and an object B are away from each other, and that a distance between a moving body and information provided to the object A and a distance between the moving body and information provided to the object B are the same at different times. In this case, if there is no need to consider the times, it is possible to equally access the information provided to the object A and the information provided to the object B. However, in reality, they happen at the different times, and the information provided to the object A and the information provided to the object B are not grouped when performing "natural grouping of information" because their "simultaneity of the accessibility to information" is low.

Further, if a moving user stays longer in an area in which certain information is accessible, he/she can access the information more easily. This may be referred to as "continuity of the accessibility to information". Here, consider two pieces of information A and B. It is assumed that, for a user, the amount of time in which the information A can be accessed and the amount of time in which the information B can be accessed are the same. However, if their time periods do not have any overlapping portion, the information A and the information B are not to be grouped for the user.

As described above, when performing "natural grouping of information provided with position information", the pieces of information whose level of "simultaneity of the accessibility" and level of "continuity of accessibility" are both high are grouped.

In other words, "natural grouping of information provided with position information" may be defined as follows:

"Putting together into one group a plurality of pieces of information to which the accessibility of an information user at the same time is high and that are correlated with the information user as long as possible". ⋯ (*)

Further, this definition can be paraphrased as follows:

"Putting together into one group a plurality of pieces of information whose simultaneity and continuity of accessibility of an information user are both high". ⋯ (**)

A grouping apparatus that will now be described performs following processing so as to perform natural grouping that is not determined not only using the position of the information, and the distance between a moving body that receives the information and the information. The strength relationship between moving bodies 200 and 400 that move in a space in which pieces of information provided with position information exist and each of the pieces of information is obtained at a certain time. The strength of relationship between the moving bodies 200 and 400 and each of the pieces of information is designed to change according to the position, direction, and speed of the moving bodies 200 and 400. Next, with respect to the relationships between the moving bodies 200 and 400 and any two of the pieces of information, similarity that indicates the strength of correlation between the two relationships is obtained, and an integrated similarity set is created by integrating similarities every time the state of the moving bodies 200 and 400 changes and by normalizing it. Then, an information classification is performed using the integrated similarity set. Using the grouping apparatus that is configured in this way permits an improvement of the efficiency of an information transmission to an information user because a plurality of pieces of information whose level of accessibility of the information user at the same time is similar and that are correlated with the information user as long as possible are put together into one group.

<Grouping Apparatus>

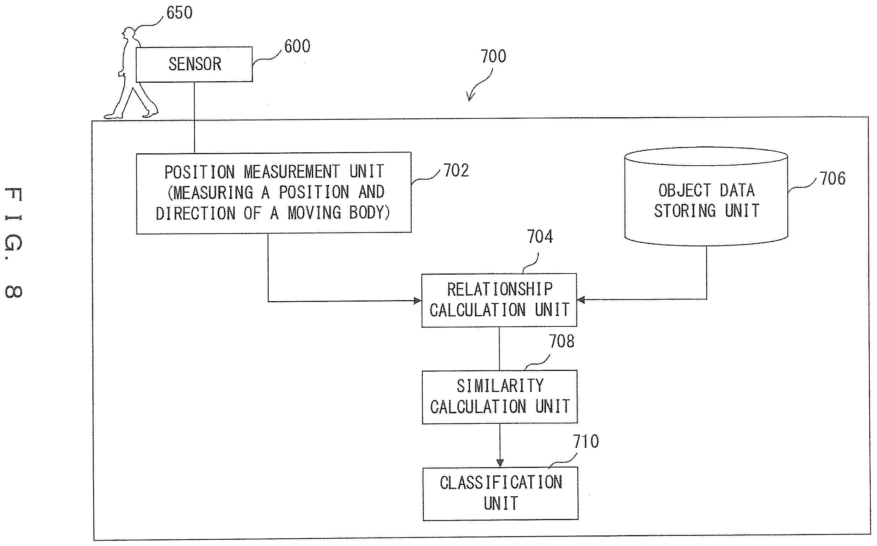

A grouping apparatus 700 according to an embodiment will now be described with reference to FIGS. 8 to 19.
A sensor 600 is connected to a grouping apparatus 700. The sensor 600 and the grouping apparatus 700 are combined to configure a grouping system.
The sensor 600 is attached to a moving body 650. The moving body 650 may be, for example, the moving body 200 in FIG. 6, or the moving body 600 in FIG. 7. Further, the moving body 650 may be a person, or objects such as a vehicle or a carrier of a car or a bicycle that have an orientation. The sensor 600 is equipped with, for example, a global positioning system (GPS), which permits identifying of a position of the sensor 600. Further, the sensor 600 may be configured to measure speed. The grouping apparatus 700 includes a position measurement unit 702, a relationship calculation unit 704, an object data storing unit 706, a similarity calculation unit 708, and a classification unit 710.
The position measurement unit 702 receives data about a position of the moving body 650 that has been measured by the sensor 600. Further, the position measuring unit 702 receives data about a speed of the moving body when the sensor 600 measures the speed of the moving body. Then, the position measurement unit 702 determines a position and a direction of the moving body.
Further, the position measurement unit 702 measures time. The time measured by the position measurement unit 702 can also be shared by the relationship calculation unit 704, the object data storing unit 706, the similarity calculation unit 708, and the classification unit 710. However, the measurement of time may be performed by a unit other than the position measurement unit 702. For example, time may be measured by a clock that is not illustrated. In this case, the time measured by the clock can also be shared by the position measurement unit 702, the relationship calculation unit 704, the object data storing unit 706, the similarity calculation unit 708, and the classification unit 710.
The object data storing unit 706 stores therein data about an object provided with "positioned information". The data may include a position of the object arranged in a space in which the moving body moves, and an orientation of the information. Further, when there is an obstacle such as a wall in the space, the object data storing unit 706 may store therein the information on a position and a material of the obstacle.
Referring to the data stored in the object data storing unit 706, the relationship calculation unit 704 calculates a relationship between the information provided to each object and the moving body 650.
For example, when the position of a certain object is $X_k$, the position of the moving body 650 is Y, and the monotone decreasing function is F(x), the relationship $r_k$ between the information provided to the object positioned in $X_k$ and the moving body 650 is defined using

$$r_k = F(|X_k - Y|) \qquad (1).$$

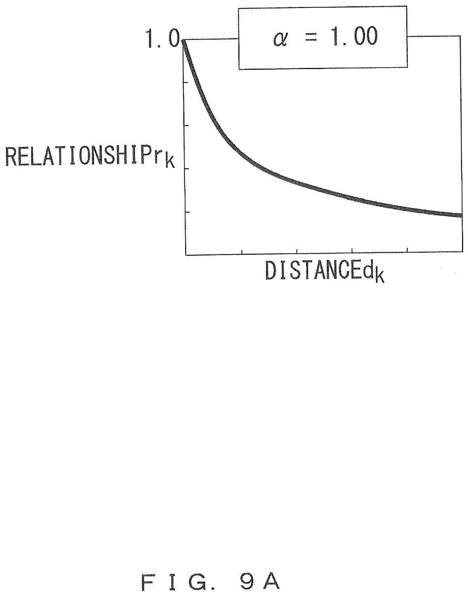

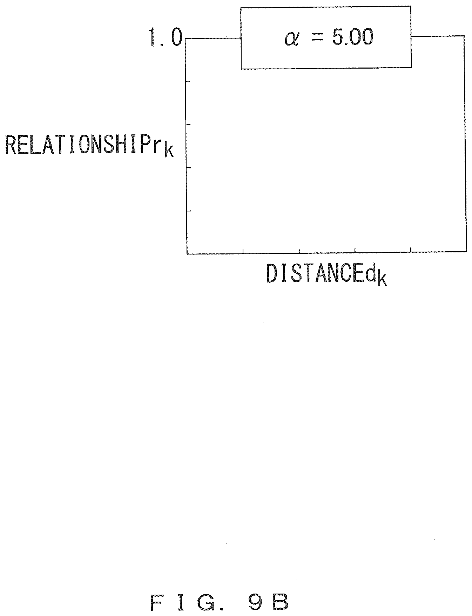

FIG. 9A is a graph that illustrates an example of a relationship between a moving body and information provided to an object that depends on an inverse of distances, and FIG. 9B is a graph that illustrates another example of a relationship between a moving body and information provided to an object that depends on an inverse of distances.
FIGS. 9A and 9B are graphs that illustrate dependencies of a relationship $r_k$ between the information provided to the object positioned in $X_k$ and the moving body 650 on a distance $d_k = |X_k - Y|$ when the relationship $r_k$ is defined as

$$r_k = \frac{1}{(|X_k - Y| + 1)^{\alpha}} \qquad (2).$$

In FIG. 9A, $\alpha$=1.00, and in FIG. 9B, $\alpha$=5.00.

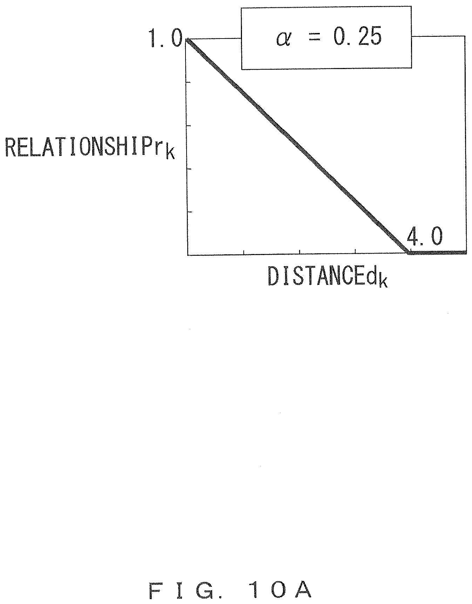

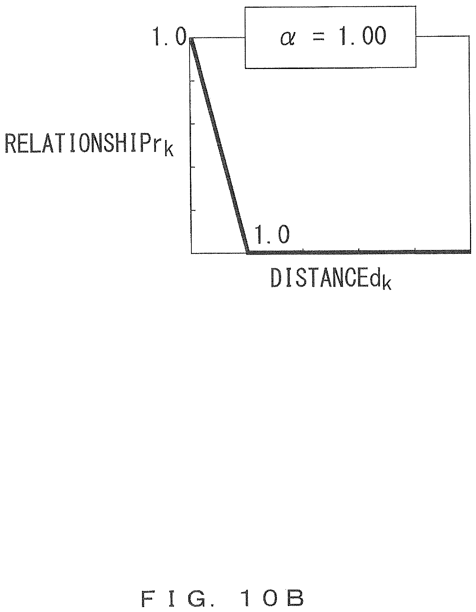

FIG. 10A is a graph that illustrates an example of a relationship between a moving body and information provided to an object that linearly depends on a distance, and FIG. 10B is a graph that illustrates another example of a relationship between a moving body and information provided to an object that linearly depends on a distance.

FIGS. 10A and 10B are graphs that illustrate dependencies of a relationship $r_k$ between the information provided to the object positioned in $X_k$ and the moving body 650 on a distance $d_k = |X_k - Y|$ when the relationship $r_k$ is defined as

$$\begin{aligned} r_k &= 1 - \alpha \cdot d_k & (d_k < 1/\alpha) \\ r_k &= 0 & (d_k \geq 1/\alpha) \end{aligned} \qquad (3).$$

In FIG. 10A, $\alpha$=0.25, and in FIG. 10B, $\alpha$=1.00.

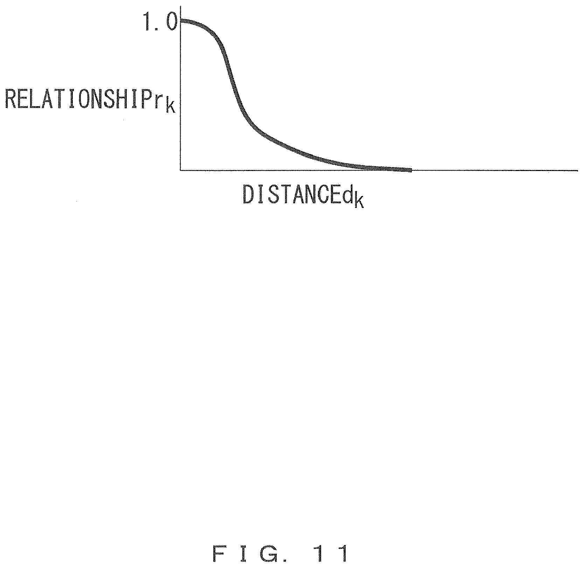

FIG. 11 is a graph that illustrates a relationship between a moving body and an object using a nearest-neighbor model.

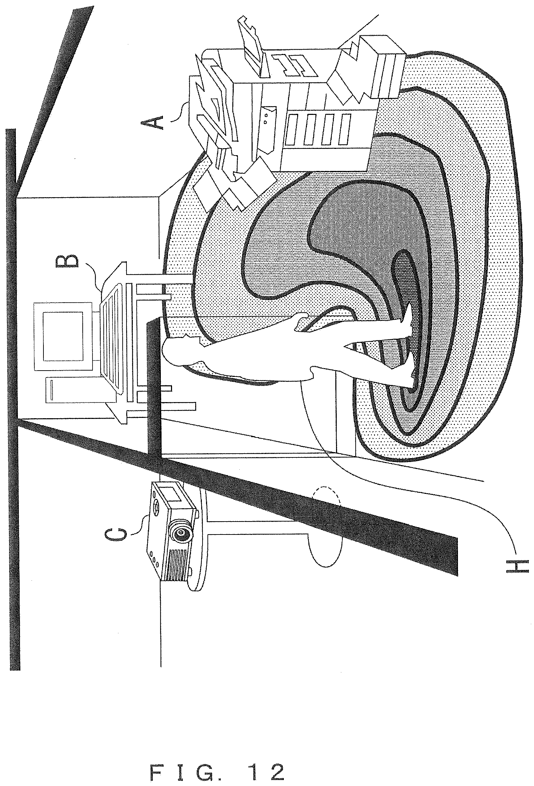

A nearest-neighbor model will now be described. FIG. 12 illustrates an outline of a nearest-neighbor model.

In FIG. 12, potential contours extend forward in front of a moving body (person) H avoiding a wall that is immovable, in which potential is maximum in the position of the moving body H. An area with a limited potential level is related to a range visible to the moving body H. Thus, as illustrated in FIG. 11, the relationship between the moving body H and an information device A, B, or C monotonically decreases with respect to a distance between the moving body H and the information device A, B, or C. When a nearest-neighbor model is used, the relationship decreases steeply along the route via which the moving body H who passes in front of the wall is not able to move. In FIG. 12, the relationship between the moving body H and the information device A is nonzero, but the relationship between the moving body H and the information device C that are separated from each other by the wall is almost zero.

The Laplacian potential is most generally used to represent potential. The Laplacian potential can be represented as a solution of the Laplace equation such as

$$\Delta\phi(x) = \delta(x - Y) \qquad (4).$$

The $\delta$ function is a value when a parameter is zero, but otherwise it is zero. The solution of the Laplace equation has the following features and advantages. The solution of the Laplace equation is continuous and smooth, and has no extreme values except for a maximum point. Thus, the solution of the Laplace equation is suitable for naturally representing the shape that extends with the moving body in its center avoiding the wall, by generating a distribution in which the maximum value is the existing position of the moving body and the minimum value is the wall surface. Further, the solution of the Laplace equation is a function of location, so there is an amount (elevation of potential) at any point on a map. This is the amount that decreases with distance from the position of the moving body (center of potential), so that is suitable to be used as an indicator of distance in which a route of the moving body is considered. The Laplacian potential can be used as a method for representing a near-field area because of these advantages. It is possible to take into account the existence of an obstacle such as a wall by setting the requirement that the solution of the Laplace equation satisfies the boundary condition $\varphi$=0 on the surface of an obstacle.

In this case, using a solution $\varphi$ (x) of the Laplace equation, the relationship $r_k$ between the information provided to the object positioned in $X_k$ and the moving body 650 may be defined as

$$r_k = \phi(X_k) \qquad (5).$$

In other words, when an equal level contour of $\varphi$ (x) of the Laplace equation is described, it is related to the distance between the object positioned in $X_k$ along the line perpendicular to the equal level contour and the moving body 650. In this case, the solution of the Laplace equation satisfies the boundary condition $\varphi$=0 on the surface of the wall, so the line perpendicular to the equal level contour does not pass through the obstacle.

When numerically solving a partial differential equation such as Formula 4 above, the relationship calculation unit 704 performs a calculation by dividing space into grid, but the Laplace equation is a partial differential equation of elliptic type and it is not possible to explicitly obtain values of cells of the grid, so a large simultaneous equation whose variable is the number of cells of the grid obtained by the division has to be solved. It takes much time to calculate this. The number of cells of the grid (resolution of space) tends to increase in order to represent the potential distributed in a space including an obstacle such as a wall. Further, considering that a simultaneous calculation may be performed with respect to a plurality of moving bodies, it is not possible to use a general grid solution because it needs too much time.

Thus, the relationship calculation unit 704 performs a potential generating calculation using a charge simulation method in order to deal with a problem of the calculation time. Using the charge simulation method permits reducing of the time needed for a potential generation.

The charge simulation method is an approximate solution method for a partial differential equation. The charge simulation method is a simple algorithm, so it permits shortening of the calculation time needed for obtaining an approximate solution and permits obtaining of a relatively high accuracy of approximation with respect to a smooth boundary. However, when the boundary shape is complicated, it is difficult to use the charge simulation method because the number of errors increases. The algorithm of the charge simulation method will now be described.

As described above, in the charge simulation method, a sample point and a charge point are determined. In the charge simulation method, the following processes are performed:

(Process 1) Set an analysis area for which potential is obtained as an area $\Omega$, and select sample points Xi (i=1, 2, ···, n: n is a natural number) inside the area $\Omega$.
(Process 2) Designate a value bi of the potential that corresponds to the position of each of the selected sample points Xi.
(Process 3) Select charge points Yi (i=1, 2, ···, n: n is a natural number) outside the area $\Omega$.
(Process 4) Assume a solution u (X) such as Formula 6 below, and determine a coefficient $Q_i$ using Formula 2 so that the solution u(Xi) satisfies the designated condition $b_i$.

$$u(X) = \sum_{i=1}^{n} Qi \log|X - Yi| \qquad (6)$$

In this case, $|X-Y_i|$ indicates the distance between the sample point X and the charge point Yi.

$$\begin{pmatrix} \log|X1 - Y1| & \log|X1 - Y2| & \cdots & \log|X1 - Yn| \\ \log|X2 - Y1| & \log|X2 - Y2| & \cdots & \log|X2 - Yn| \\ \vdots & \vdots & \ddots & \vdots \\ \log|Xn - Y1| & \log|Xn - Y2| & \cdots & \log|Xn - Yn| \end{pmatrix} \begin{pmatrix} Q1 \\ Q2 \\ \vdots \\ Qn \end{pmatrix} = \begin{pmatrix} b1 \\ b2 \\ \vdots \\ bn \end{pmatrix} \qquad (7)$$

Eventually, this simultaneous equation also needs to be solved in the charge simulation method. However, the time needed for calculation is much shorter because the number of unknowns is fewer compared to the conventional grid solution.

In the charge simulation method, selecting several charge and sample points along a boundary of a space to be analyzed permits calculating of the potential that is smoothly distributed with respect to the boundary and that satisfies the designated condition on the boundary. Using such characteristics, the relationship calculation unit 704 of the grouping apparatus 700 is able to generate a potential distribution that extends along the passable area within the space by arranging the sample points and the corresponding charge points along the surface of the obstacle.

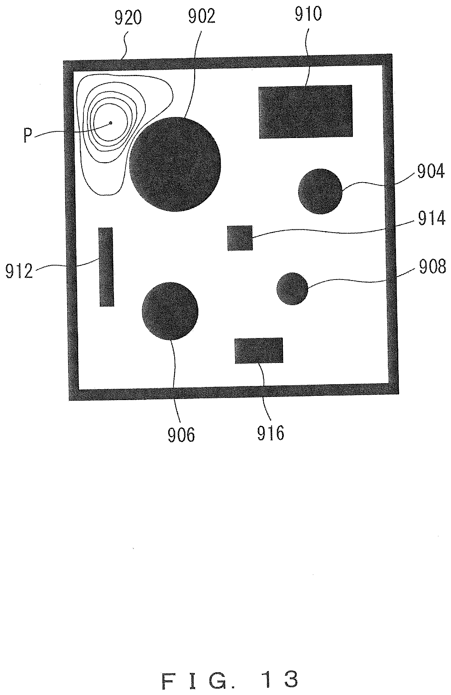

FIG. 13 illustrates an example of potential that changes in conjunction with a movement of a person.

In FIG. 13, obstacles 902, 904, 906, 908, 910, 914, and 916 are arranged within a space surrounded by a wall 920. A moving body is assumed to be in a position P. FIG. 13 illustrates potential contours having a maximum value in the position P. The contours extend avoiding the wall 920 and the obstacle 902.

The case in which the relationship $r_k$ is determined only using the position of the object provided with information and the position of the moving body 650 has been described above, but the relationship calculation unit 704 may consider the orientation of the information, or the speed or the orientation of the moving body 650 to calculate the relationship $r_k$.

For example, it is assumed that the position of an object provided with information is $X_k$ and the orientation of the information is $V_k$. Further, it is assumed that the position of the moving body 650 is Y and its orientation is $V_Y$. The orientations $V_1$ and $V_Y$ may be unit vectors of magnitude one.

In this case, the relationship calculation unit 704 may define the relationship $r_k$ between the information provided to the object positioned in $X_k$ and the moving body 650 using

$$r_k = \frac{(1 - V_k \cdot V_Y)}{|X_k - Y|} \qquad (8).$$

The value of this formula is larger if the distance between the information provided to the object positioned in $X_k$ and the moving body is smaller and when the orientations of the information and the moving body face each other. The value of this formula is also large when the moving body and the information face in opposite directions. In this case, it is possible to calculate a cross product of the orientations $V_k$ and $V_Y$, and to determine, from a sign of a result of the calculation, the case in which they face in the directions exactly opposite to each other, and it may be set to $r_k=0$.

Further, the relationship calculation unit 704 may define the relationship $r_k$ between the information provided to the object positioned in $X_k$ and the moving body 650 using

$$r_k = (1 - V_k \cdot V_Y) \times \phi(X_k) \qquad (9)$$

by use of the potential $\varphi(x)$ of Formula 5. In this case, the relationship $r_k$ is larger if the distance along the line perpendicular to the potential is shorter, and is large when the orientation $V_k$ of the information provided to the object and the orientation $V_Y$ of the moving body face each other.

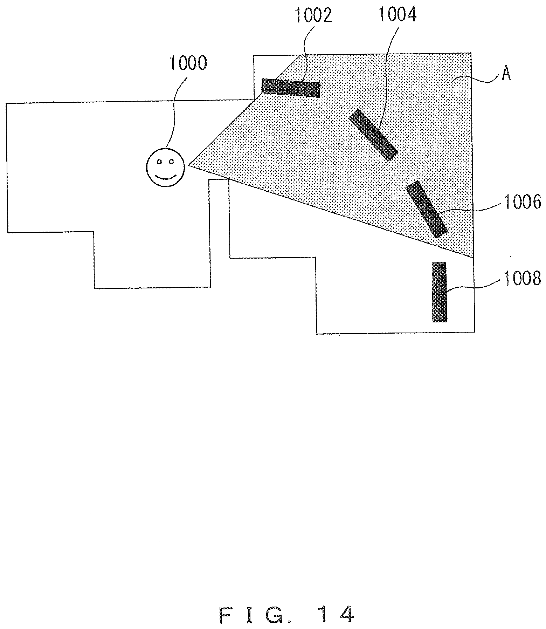

FIG. 14 illustrates an example of a relationship between a range visible to a moving body and an advertising sign. FIG. 14 illustrates an example of how to determine the relationship $r_k$ when the spatial structure is considered.

In FIG. 14, a moving body is a person 1000, and an area A is a visible range included in the field of view of the person 1000. There are objects 1002, 1004, 1006, and 1008 provided with pieces of information in the same space as the person 1000. In this case, with respect to the objects that are not included in the area A, the relationship may be determined to be $r_k=0$.

After the relationship calculation unit 704 calculates the relationship $r_k$ between the information provided to the object positioned in $X_k$ and the moving body 650, the similarity calculation unit 708 calculates similarities $C_{(i,j)}$ with respect to all pairs of pieces of information. A collection $\{C_{(i,j)}\}$ of the similarities $C_{(i,j)}$ with respect to all pairs of pieces of information may be referred to as a similarity set. For example, the similarity calculation unit 70 calculates a similarity $C_{(i,j)}$ between the information provided to the object positioned in $X_i$ and the information provided to the object positioned in $X_j$. If the value of the similarity $C_{(i,j)}$ is larger, the information provided to the object positioned in $X_i$ and the information provided to the object positioned in $X_j$ are "more similar", and they are more likely to be grouped. If there are n objects, the similarity $C_{(i,j)}$ has $(1/2)n(n-1)$ independent components. A set of $(1/2)n(n-1)$ similarities may be referred to as a similarity set.

For example, similarity $C_{(i,j)}$ between information provided to the object positioned in $X_i$ and information provided to the object positioned in $X_j$ preferably has characteristics such that, using a relationship $r_i$ between the information provided to an object positioned in $X_i$ and a moving body positioned in Y, and a relationship $r_j$ between the information provided to an object positioned in $X_j$ and the moving body positioned in Y,

(C1) symmetric with respect to interchanging between the indexes i and j, that is, $C_{(i,j)}=C_{(j,i)}$,
(C2) similarity $C_{(i,j)}$ is zero when either of the relationships is zero, and
(C3) the value is larger when the values of $r_i$ and $r_j$ are larger and the difference between them is smaller.

For example, similarity $C_{(i,j)}$ at a certain time t may be defined as

$$C_{(i,j)} = \frac{r_i \cdot r_j}{(1 + |r_i - r_j|)} \qquad (10).$$

The value of this formula is larger if the values of the relationship $r_i$ and the relationship $r_j$ are larger and the difference between them is smaller. The similarity $C_{(i,j)}$ is zero when either of the relationships is zero. The similarity $C_{(i,j)}$ has the symmetric characteristics with respect to interchanging between the indexes i and j, so $C_{(i,j)}=C_{(j,i)}$. A similarity set can be expressed in a matrix form, as

$$C = \begin{pmatrix} 0 & C_{(1,2)} & \cdots & C_{(1,n)} \\ C_{(2,1)} & 0 & & \\ \vdots & & \ddots & \vdots \\ C_{(n,1)} & C_{(n,2)} & \cdots & 0 \end{pmatrix} \quad (11).$$

A matrix C represents similarity of a relationship with information provided to an object when a moving body is in a certain position Y.

The similarity $C_{(i,j)}$ between the information provided to the object in the position $X_i$ and the information provided to the object in the position $X_j$ when the moving body is in the position Y has been defined above using Formula 5, but it may be defined using another formula that satisfies (C1) to (C3).

This similarity $C_{(i,j)}$ indicates to what extent the information provided to the object in the position $X_i$ and the information provided to the object in the position $X_j$ can equally be recognized from the moving body when the moving body is in the position Y at a certain time t.

Further, the similarity calculation unit 708 calculates a similarity set that is represented using a matrix C every time the moving body moves and integrates them, so as to calculate integrated similarity.

For example, if a similarity set at a time t is C(t), integrated similarity C* is

$$C^* = \int dt C(t) \quad (12).$$

The integrated similarity C* is a matrix that includes $C^*_{(i,j)}$ as an element. In this case, integrals with respect to the matrix are obtained by performing an integration for each matrix element and are expressed in a matrix form, that is, they are defined as

$$C^* = \begin{pmatrix} 0 & C^*_{(1,2)} & \cdots & C^*_{(1,n)} \\ C^*_{(2,1)} & 0 & & \\ \vdots & & \ddots & \vdots \\ C^*_{(n,1)} & C^*_{(n,2)} & \cdots & 0 \end{pmatrix} = \begin{pmatrix} 0 & \int dt C_{(1,2)}(t) & \cdots & \int dt C_{(1,n)}(t) \\ \int dt C_{(2,1)}(t) & 0 & & \\ \vdots & & \ddots & \vdots \\ \int dt C_{(n,1)}(t) & \int dt C_{(n,2)}(t) & \cdots & 0 \end{pmatrix}$$

$$(13).$$

Formulas 8 and 9 describe as if time is a continuous variable, but in fact, the sensor 600 acquires the information such as the position and the orientation of the moving body 650 discretely with respect to time. Thus, in Formulas 8 and 9 above, a discrete system may be approximately represented by use of a continuous variable t, as in Formula 16 below.

The integral range in Formulas 8 and 9 above is from a time to another time, but it may be, for example, a time period during which a moving body arrives at a position from another position.

Further, the matrix C* may be normalized by dividing each element by a largest element. The moving pattern of the moving body is reflected in the matrix C* of similarities obtained by continually integrating during a certain time period. The matrix C* provides a set of integrated similarities.

The example of one moving body has been described above. However, the above description may also be readily expanded to the case in which there are a plurality of moving bodies.

The classification unit 710 groups pieces of information on the basis of the similarity calculated by the similarity calculation unit 708. The classification unit 710 creates a graph of relationships linked to one another by use of links whose strength is represented by an element value in the similarity matrix C*, and performs grouping by severing the links of the elements whose linkage strength is not greater than a threshold.

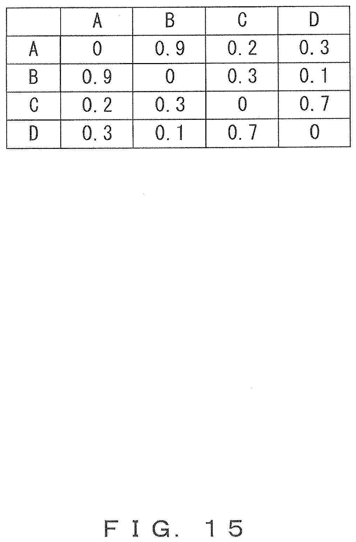

FIG. 15 is a table that illustrates an example of a set of integrated similarities.

The table of FIG. 15 illustrates examples of matrix elements of a 4x4 symmetric matrix C* that represents the set of integrated similarities with respect to pieces of information A, B, C, and D. For example, the value of $C_{(A,B)}$ element is 0.9, and the value of $C_{(A,c)}$ element is 0.2.

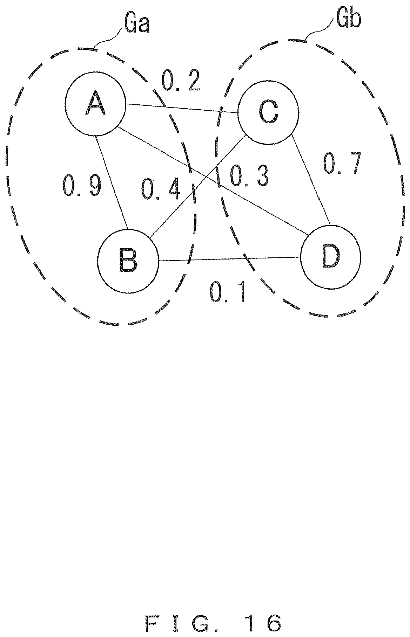

FIG. 16 illustrates an example of a relationship graph that is created using the set of integrated similarities illustrated in FIG. 15. For example, the strength of the link that connects a node A and a node B is 0.9, reflecting that the value of $C_{(A,B)}$ element is 0.9. Likewise, the strength of the link that connects the node A and a node C is 0.2, the strength of the link that connects the node A and a node D is 0.3, the strength of the link that connects the node B and the node C is 0.3, and the strength of the link that connects the node B and the node D is 0.7.

The classification unit 710 severs, for example, the links in the graph of FIG. 16 whose strength is less than 0.5 that is a threshold. A threshold is a value of a boundary for classifying whether two pieces of information are similar, that is, whether to group them. In the case of the graph illustrated in FIG. 15, the link that connects the node A and the node B (the strength of the link is 0.9) and the link that connects the node A and the node B (the strength of the link is 0.7) are left. Accordingly, the classification unit 710 groups the information A and the information B as a group Ga and groups the information C and the information D as a group Gb.

When the number of pieces of information is large, the size of the similarity matrix C* of Formula 9 becomes large accordingly.

In FIG. 16, the strength of link is classified using one threshold, but hierarchical grouping may be performed using a plurality of different thresholds for the respective links.

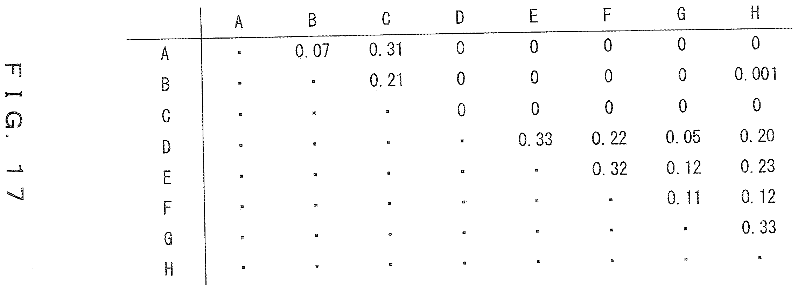

FIG. 17 is a graph that illustrates another example of a set of integrated similarities.

The table of FIG. 17 illustrates examples of matrix elements of an 8x8 symmetric matrix C* that represents the set of integrated similarities with respect to pieces of information A, B, C, D, E, F, G, and H. In this case, in a graph created from the matrix C* of FIG. 17, it is possible to perform a hierarchical classification by gradually relaxing thresholds for classifying the strength of link and by performing a multiple-times classification. It is possible to perform a systematic classification, for example, by visualizing a result of it as a dendrogram. This indicates that "hierarchical grouping" has been performed. In order to perform this "hierarchical grouping", the theory of hierarchical clustering that is a graph theory may be applied.

In the theory of hierarchical clustering, for example, the following processing is performed. When the data formed with N targets $x_1$ to $x_N$ is provided, a state in which there are N clusters only including one target is created as an initial state. A distance d(C1,C2) between clusters is calculated from a distance $d(x_i,x_j)$ between the target $x_i$ and the target $x_j$ (dissimilarity), and the two clusters having a closest distance from each other are sequentially merged. A result of such processing can be represented by a dendrogram. The dendrogram is a binary tree in which each non-terminating node represents each target and a cluster obtained by merging is represented by use of non-terminating nodes. There are several methods depending on the functions that represent a distance d(C1,C2) between clusters. For example, in the nearest neighbor method, the distance d(C1,C2) between clusters is defined as a minimum distance from among the distances between the targets included in the cluster C1 and the targets included in the cluster C2. In the furthest neighbor method, the distance d(C1,C2) between clusters is defined as a maximum distance from among the distances between the targets included in the cluster C1 and the targets included in the cluster C2. Further, the group average method that defines, as the distance d(C1,C2) between clusters, an average of the distances between the targets included in the cluster C1 and the targets included in the cluster C2, and the Ward's method that minimizes the sum of squares of distances from the targets to the centroids of the clusters including the respective targets are known. Any of the methods above can be used for hierarchical grouping.

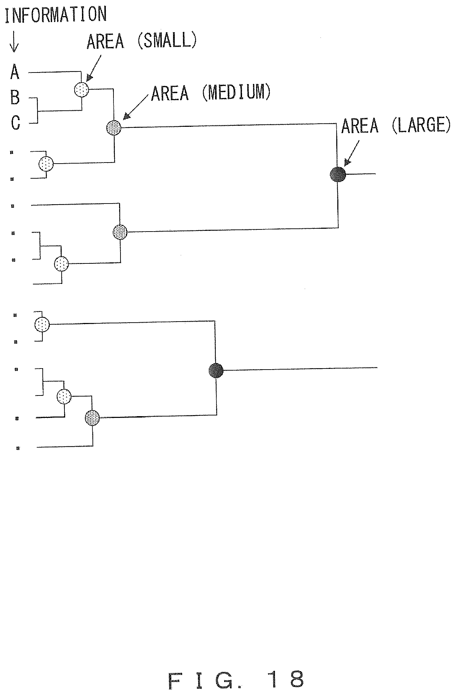

FIG. 18 illustrates an example of a dendrogram that is created using the set of integrated similarities illustrated in FIG. 17.

For example, with respect to the pieces of information A, B, and C in FIG. 18, the value of the similarity $C_{(A,B)}$ between the information A and the information B is 0.07, the value of the similarity $C_{(A,C)}$ between the information A and the information C is 0.31, and the value of the similarity $C_{(B,C)}$ between the information B and the information C is 0.21. As illustrated in FIG. 18, if the value of the threshold for classifying whether they are similar, that is, whether to group them is gradually increased, first the information B and the information C are grouped. The group formed by grouping the information B and the information C is referred to as $G_{(B,C)}$. If the value of the threshold is further gradually increased, the information A and the information C are grouped. Grouping of information A and the information C permits hierarchical grouping to be realized because the information C and the information B have been already grouped.

As illustrated in FIG. 18, when performing hierarchical grouping, an area to be grouped is gradually larger if the threshold is larger.

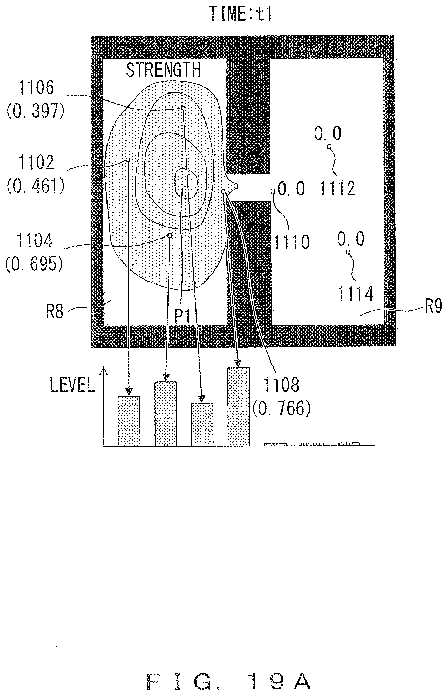

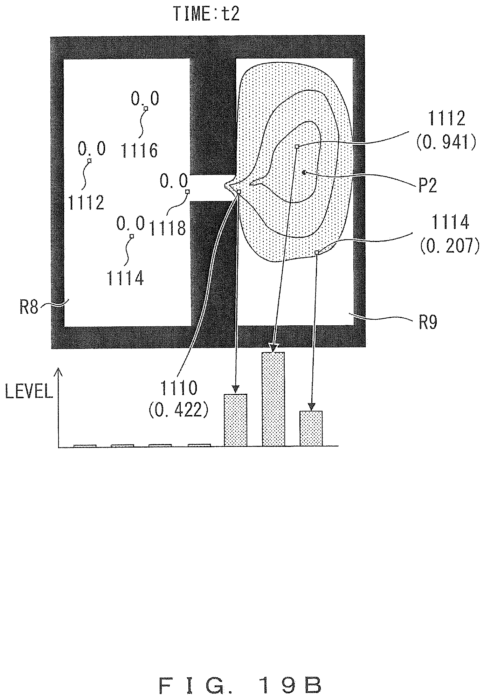

FIG. 19A illustrates an example of natural grouping of information using a nearest-neighbor model, and FIG. 19B illustrates another example of natural grouping of information using the nearest-neighbor model. In FIGS. 19A and 19B, the levels of relationship $r_k$ provided to the objects designated with numerals are illustrated in parentheses with the numerals. For example, in FIG. 19A, a moving body is in a position P1 at a time t1, and in the same room R8 as the moving body, there are objects 1102, 1104, 1106, and 1108 provided with pieces of information. The level of relationship between the moving body and the information provided to the object 1102 is 0.461. The level of relationship between the moving body and the information provided to the object 1104 is 0.695. The level of relationship between the moving body in the position P1 and each of the pieces of information provided to objects 1110, 1112, and 1114 that are arranged in a room 9 is 0.0.

Further, for example, as illustrated in FIG. 19B, the moving body is in a position P2 at a time t2, and in the same room R9 as the moving body, there are objects 1110, 1112, and 1114. The level of the relationship between the moving body and the information provided to the object 1110 is 0.422. The level of the relationship between the moving body in the position P2 and each of the pieces of information provided to objects 1102, 1104, 1106, and 1108 that are arranged in the room 8 is 0.0.

As described above, at the time t1, the levels of relationship between the moving body and each of the pieces of information provided to the objects 1102, 1104, 1106, and 1108 that are arranged in the same room R8 is high. On the other hand, at the time t2 when the moving body has moved to the room 9, the levels of relationship between the moving body and each of the pieces of information provided to the objects 1102, 1104, 1106, and 1108 that are arranged in the room R8 is low. Accordingly, when a moving body and information exist in positions close to each other at a certain time, the level of their relationship r is high.

As described above, with respect to similarity C, similarity $C_{(i,j)}$ between information positioned in $X_i$ and information positioned in $X_j$ from among a plurality of pieces of information has characteristics such that, using a relationship $r_i$ between the information positioned in $X_i$ and a moving body positioned in Y and the relationship $r_j$ between the information positioned in $X_j$ and the moving body positioned in Y,

(C1) $C_{(i,j)}=C_{(j,i)}$, that is, symmetric with respect to interchanging between the indexes i and j,

(C2) $C_{(i,j)}=0$ when either of the relationship $r_i$ or the relationship $r_j$ is zero, and

(C3) the value is larger when the values of the relationships $r_i$ and $r_j$ are larger and the difference between the relationships $r_i$ and $r_j$ is smaller.

For example, with respect to the objects 1102 and 1104 in FIG. 19A, the values level themselves are large and the difference between them are small, so the similarity is high. Further, for example, the similarity between the pieces of information provided to the object 1102 and to the object 1110 that are arranged in the different rooms is zero.

Consider integrated similarity C* obtained by time-integrating the relationship r. An element in the integrated similarity C* is larger if a time period during which an object provided with information is included in the field of view of a moving body is longer.

According to such a grouping apparatus 700 as described above, "natural grouping of information" based on a movement route of an information user and the accessibility to the information at a certain time can be performed.

For example, when the object is an advertising sign and the information is an advertisement, the classification is based not only on the level of advertising effectiveness but also on the simultaneity. In other words, the advertising signs that increase the advertising effectiveness simultaneously are to be put together considering the behavioral patterns of people who look at the advertisement. According to this classification scheme, if there are signs that are physically close to each other and stand facing in the same direction and if there is an increase in advertising effectiveness for each of the signs, the two signs are not to be grouped unless there is a moment when there is an increase in advertising effectiveness for the two advertising signs at the same time. It will be appreciated that, in other words, signs that are physically similar may belong to different groups by interpreting as inclusive of behavioral patterns of information users and the spatial structure from the perspective of advertising effectiveness.

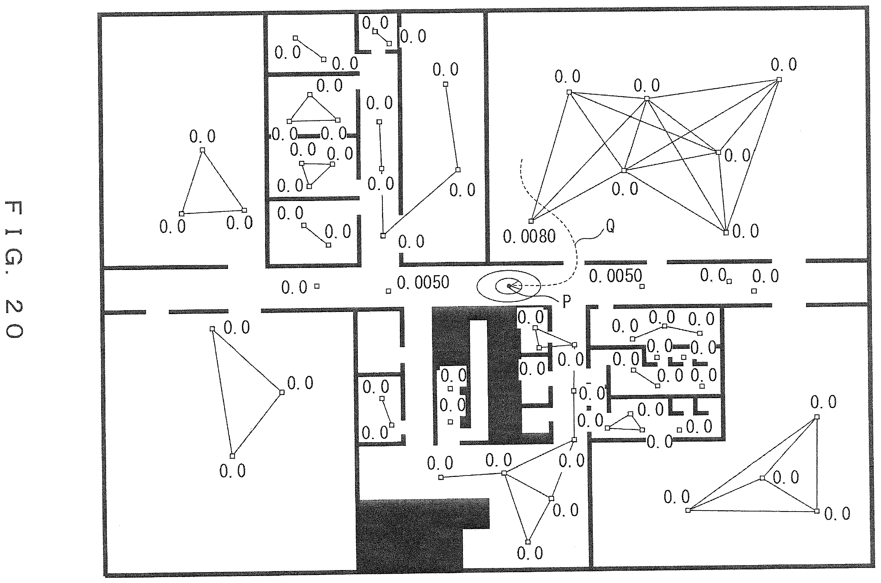

FIG. 20 illustrates an example of a result of grouping of information with potential using a nearest-neighbor model. In FIG. 20, the level of relationship between information provided to each object and a moving body is illustrated for each object.

In FIG. 20 illustrates grouping of pieces of information provided to objects when there is a moving body that arrives at a position P via a route Q as represented by a dotted line. Relationships are calculated using the nearest-neighbor model above. As illustrated in FIG. 20, the level of relationship is high when it is information provided to an object that is close to the route Q of the moving body and near which the moving body stays for a long time. Further, the pieces of information provided to the objects that are arranged across the wall from one another are not grouped.

As illustrated in FIG. 20, for the accessibility of a person to an information device, if the strength of relationship between information devices such as a personal computer (PC) and a printer and a user of these information devices is defined, a result of the classification is to be organized on the basis of the "accessibility of a user to an information device". This permits perform, by use of the result of the classification, processing that includes sensing a group of devices that have become accessible to a person and powering up the devices in advance.

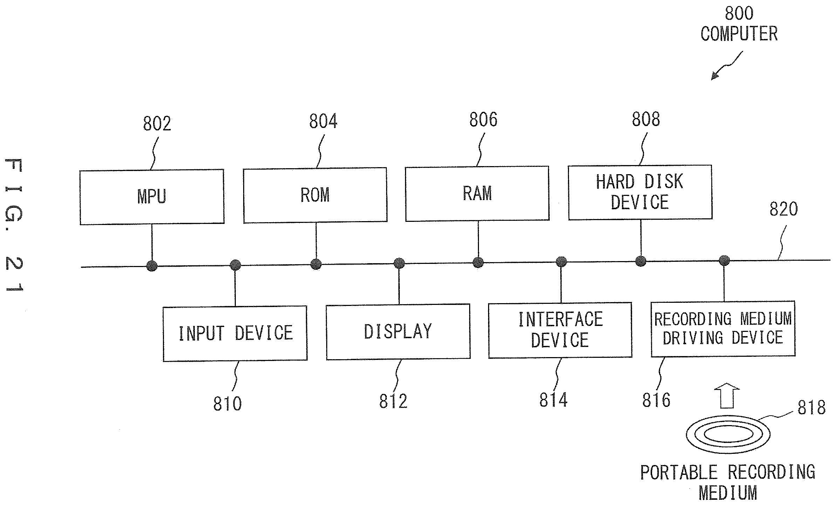

FIG. 21 illustrates an example of a configuration of a grouping apparatus 700 according to the embodiment. The grouping apparatus 700 can be realized as a general-purpose computer 800.

The computer 800 includes an MPU 802, a ROM 804, a RAM 806, a hard disk device 808, an input device 810, a display 812, an interface device 814, and a recording medium driving device 816. These components are connected to one another via a bus line 820, and are able to transmit and receive various pieces of data with one another under the control of the MPU 802.

The MPU (micro processing unit) 802 is an arithmetic processing unit that controls the operation of the entire computer 800 and serves as a control processing unit of the computer 800.

The ROM (read only memory) 804 is a read only semiconductor memory that has recorded thereon a predetermined basic control program in advance. The MPU 802 reads and executes the basic control program when the computer 800 starts, and thereby it is possible to control the operation of each component of the computer 800.

The RAM (random access memory) 806 is a semiconductor memory that is recordable and readable at any time and which the MPU 802 uses as a working storage area as needed when the MPU 802 executes various control programs.

The hard disk device 808 is a storage that stores therein various programs and data executed by the MPU 802. The MPU 802 is able to perform a variety of various control processes that will be described below, by reading and executing the predetermined control programs stored in the hard disk device 808.

The input device 810 is, for example, a mouse device or a keyboard device, and when it is operated by a user of the grouping apparatus 700, it acquires an input of various pieces of information associated with the operational contexts and transmits the acquired input information to the MPU 802.

The display 812 is, for example, a liquid-crystal display, and displays various texts and images according to the display data transmitted from the MPU 802.

The interface device 814 manages a transmission and a reception of various pieces of information between various devices that are connected to the computer 800.

The recording medium driving device 816 is a device that reads various programs and data recorded on a portable recording medium 818. The MPU 802 is also able to perform the various control processes that will be described below, by reading and executing the predetermined control program stored in the portable recording medium 818 via the recording medium driving device 816. A flash memory, a CD-ROM (compact disc read only memory), and a DVD-ROM (digital versatile disc read only memory) that are equipped with a USB (universal serial bus) standard connector are examples of the portable recording medium 818.

In order to configure the grouping apparatus 700 by use of such a computer 800, for example, a control program is created that causes the MPU 802 to perform the processing in each of the processing devices described above. The created control program is stored in the hard disk device 808 or in the portable recording medium 818 in advance. Then, a predetermined instruction is given to the MPU 802 so that the control program is read and executed. This permits the MPU 802 to provide the functions included in the grouping apparatus 700.

As described above, the grouping apparatus 700 permits an improvement of the efficiency of an information transmission to an information user because a plurality of pieces of information whose level of accessibility of the information user at the same time is similar and that are correlated with the information user as long as possible are put together into one group.

<Grouping Processing>

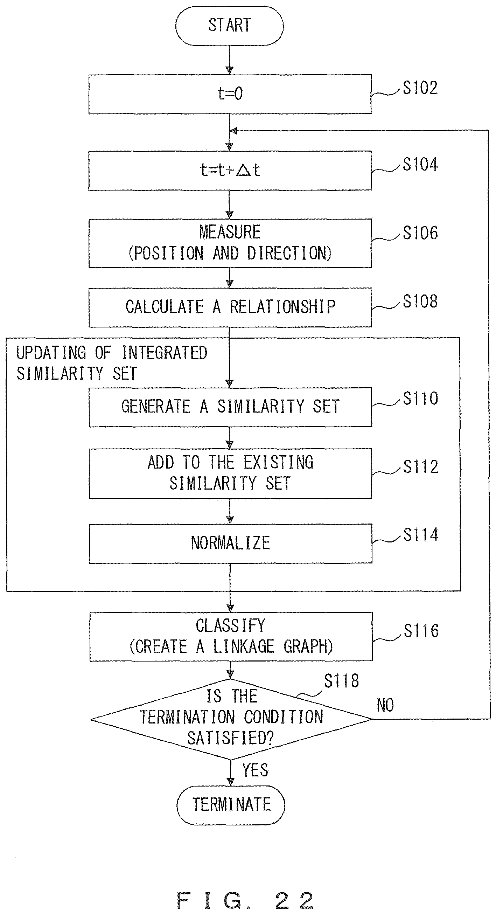

FIG. 22 is a flowchart that illustrates an example of a processing flow of grouping.

When the grouping apparatus 700 is the general-purpose computer 800 illustrated in FIG. 21, the following description defines a control program that performs such processing. In other words, the following description is also a description of a control program that causes the general-purpose computer to perform processing described below.

When the processing starts, the position measurement unit 702 of the grouping apparatus 700 resets the time to t=0 in S102. Then, when the process in this step ends, the process moves on to S104.

In S104, the position measurement unit 702 of the grouping apparatus 700 advances time by $\Delta t$. Then, when the process in this step ends, the process moves on to S106.

In S106, the position measurement unit 702 of the grouping apparatus 700 measures a position of a moving body. Here, it may measure a direction, that is, a heading direction of the moving body. Then, the process moves on to S108.

In S108, the relationship calculation unit 704 of the grouping apparatus 700 calculates a relationship between each object and the moving body referring to the data stored in the object data storing unit 706. Then, when the process in this step ends, the process moves on to S108.

For example, when it is assumed that a position of a certain object is $X_k$, a position of a moving body 650 is Y, and a monotone decreasing function is F(x), a relationship $r_k$ between the object positioned in $X_k$ and the moving body 650 is calculated using

$$r_k = F(|X_k - Y|) \qquad (14).$$

In particular, Formula 13 described above may be any of Formula 2, Formula 3, or Formula 5. Then, when the process in this step ends, the process moves on to S110.

In S110, the similarity calculation unit 708 of the grouping apparatus 700 calculates similarity $C_{(i,j)}$ with respect to all pairs of objects.

Using the relationship $r_i$ between an object positioned in $X_i$ and an moving body positioned in Y, and the relationship $r_j$ between an object positioned in $X_j$ and the moving body positioned in Y, similarity $C_{(i,j)}$ between information provided to the object positioned in $X_i$ and information provided to the object positioned in $X_j$ is preferably a function that satisfies (C1) to (C3) described above. As an example, the similarity $C_{(i,j)}$ may be

$$C_{(i,j)} = \frac{r_i \cdot r_j}{\left(1 + \left| r_i - r_j \right| \right)} \qquad (15)$$

as described above.

A collection $\{C_{(i,j)}(t)\}$ of the similarities $C_{(i,j)}(t)$ at a time t with respect to all pairs of objects may be referred to as a similarity set. Then, when the process in this step ends, the process moves on to S112.

In S112, the similarity calculation unit 708 of the grouping apparatus 700 calculates integrated similarity C* at a time t by adding the similarities $C_{(i,j)}$ calculated in S110 to the existing similarity set, that is,

$$C^*(t) = C^*(t - \Delta t) + C(t)\Delta t \qquad (16)$$

is calculated. In this case, C(t) is a matrix, so Formula 15 described above is a matrix equation. Then, when the process in this step ends, the process moves on to S114.

In S114, the similarity calculation unit 708 of the grouping apparatus 700 normalizes the integrated similarity C*. For the way of normalizing, for example, each element may be divided by a maximum matrix element of the integrated similarity C*. When the process in this step ends, the process moves on to S116.

In S116, the classification unit 710 of the grouping apparatus 700 performs grouping information on the basis of the similarities calculated in S110 to S114. For example, it creates a graph of relationships linked to one another by use of links whose strength is represented by an element value in the similarity matrix C*, and performs grouping by severing the links of the elements whose linkage strength is not greater than a threshold. FIG. 16 illustrates an example of grouping. When the process in this step ends, the process moves on to S118.

In S118, the classification unit 710 of the grouping apparatus 700 determines whether the termination condition is satisfied. The termination condition may be whether a specific moving body has arrived at a certain position. The termination condition may also be whether a predetermined time period has elapsed. Further, the process in this step may be performed by a component other than the classification unit 710, for example, by the position measurement unit 702. If a determination result in this step is "Yes", that is, if it satisfies the termination condition, the processing terminates. If the determination result in this step is "No", that is, if it does not satisfy the termination condition, the process returns to S104.

Performing such processing permits natural grouping of information provided with position information such as (*) and (**) described above to be performed. It is possible to efficiently report information to an information user because grouping of information is performed on the basis of the accessibility of the information user to pieces of information at the same time.

REFERENCE SIGNS LIST

600     sensor
700     grouping apparatus
702     position measurement unit
704     relationship calculation unit
706     object data storing unit
708     similarity calculation unit
710     classification unit

**Claims**

1.  A grouping apparatus comprising:

    a relationship calculation unit (704) configured to calculate, at a plurality of times between a first time and a second time, the strength of correlation between a position of each of a plurality of objects arranged in a space and a position of a moving body as a level of relationship for each of the plurality of pieces of information, wherein the moving body moves within the space;
    a similarity calculation unit (708), on the basis of the level of relationship for each of the plurality of pieces of information, configured to calculate similarities for all pairs of the plurality of pieces of information at the plurality of times, to integrate the calculated similarities for each of all the pairs of the plurality of pieces of information, and to calculate integrated similarities; and
    a classification unit (710) configured to group the plurality of pieces of information on the basis of the integrated similarities.

2.  The grouping apparatus according to claim 1, further including an object data storing unit (706) that is configured to store therein information on a plurality of objects and the position of a position of an obstacle that exists in the space in which the plurality of objects are arranged and that prevents the movement of the moving body, wherein the relationship calculation unit (704) is configured to calculate the strength of the correlation between a position of each of a plurality of objects arranged in a space and a position of the moving body that moves within the space, on the basis of a distance of a route that is used by the moving body moving within the space and that does not pass through the obstacle.

3.  The grouping apparatus according to claim 1 or 2, wherein the relationship calculation unit (704) is configured to calculate a relationship by use of a monotone decreasing function F(x), using

    $$r_k = F(|X_k - Y|) \qquad (17),$$

    wherein
    $X_k$ is a position of one of the plurality of objects and Y is a position of the moving body.

4.  The grouping apparatus according to claim 2, wherein
    the relationship calculation unit (704) is configured to calculate the strength of correlation between a piece of information, from among the plurality of pieces of information, positioned in $X_k$ and the moving body positioned in Y using

    $$r_k = \phi(X_k) \qquad (19)$$

    obtained by using a solution $\varphi$ of the Laplace equation,

    $$\Delta\phi(x) = \delta(x - Y) \qquad (18),$$

    that satisfies the boundary condition $\varphi=0$ on the surface of the obstacle.

5.  The grouping apparatus according to any one of claims 1 to 4, wherein
    the relationship calculation unit (704) is configured to calculate the level of relationship considering the orientation of each of the plurality of pieces of information and the orientation of the moving body.

6.  The grouping apparatus according to any one of claims 1 to 5, wherein
    the relationship calculation unit (704) is configured to calculate the level of relationship by using a function that is maximum when each of the plurality of pieces of information and the moving body are oriented 180 degrees differently from each other.

7.  The grouping apparatus according to any one of claims 1 to 6, wherein

the classification unit (710) is configured to perform hierarchical grouping by preparing a plurality of thresholds that are different from one another for the integrated similarities.

8. The grouping apparatus according to any one of claims 1 to 7, wherein
the classification unit (710) is configured to calculate similarity $C_{(i,j)}$ between information positioned in $X_i$ and information positioned in $X_j$ from among the plurality of pieces of information by use of a function such that, using a relationship $r_i$ between the information positioned in $X_i$ and the moving body positioned in Y, and a relationship $r_j$ between the information positioned in $X_j$ and the moving body positioned in Y,

   (C1) $C_{(i,j)}=C_{(j,i)}$, that is, symmetric with respect to interchanging between the indexes i and j,
   (C2) $C_{(i,j)}=0$ when either of the relationship $r_i$ or the relationship $r_j$ is zero, and
   (C3) the value is larger when the values of the relationships $r_i$ and $r_j$ are larger and the difference between the relationships $r_i$ and $r_j$ is smaller.

9. A grouping system comprising:

   a sensor (600) configured to measure, at a plurality of times between a first time and a second time, a position of a moving body that moves within a space in which a plurality of objects are arranged, wherein each of the plurality of objects is provided with a corresponding one of a plurality of pieces of information;
   a relationship calculation unit (704) configured to calculate the strength of correlation between a position of each of a plurality of objects arranged in a space and the position of the moving body as a level of relationship for each of the plurality of pieces of information, wherein the moving body moves within the space;
   a similarity calculation unit (708), on the basis of the level of relationship for each of the plurality of pieces of information, configured to calculate similarities for all pairs of the plurality of pieces of information at the plurality of times, to integrate the calculated similarities for each of all the pairs of the plurality of pieces of information, and to calculate integrated similarities; and
   a classification unit (710) configured to group the plurality of pieces of information on the basis of the integrated similarities.

10. A grouping method that is executable by a computer, the grouping method comprising:

   calculating, at a plurality of times between a first time and a second time, the strength of correlation between a position of each of a plurality of objects arranged in a space and a position of a moving body as a level of relationship for each of the plurality of pieces of information, wherein the moving body moves within the space;
   on the basis of the level of relationship for each of the plurality of pieces of information, calculating similarities for all pairs of the plurality of pieces of information at the plurality of times, integrating the calculated similarities for each of all the pairs of the plurality of pieces of information, and calculating integrated similarities; and
   grouping the plurality of pieces of information on the basis of the integrated similarities.

11. A program for causing a computer to execute a process comprising:

   calculating, at a plurality of times between a first time and a second time, the strength of correlation between a position of each of a plurality of objects arranged in a space and a position of a moving body as a level of relationship for each of the plurality of pieces of information, wherein the moving body moves within the space;
   on the basis of the level of relationship for each of the plurality of pieces of information, calculating similarities for all pairs of the plurality of pieces of information at the plurality of times, integrating the calculated similarities for each of all the pairs of the plurality of pieces of information, and calculating integrated similarities; and
   grouping the plurality of pieces of information on the basis of the integrated similarities.

**Patentansprüche**

1. Gruppierungsvorrichtung, die umfasst:

   eine Beziehungsberechnungseinheit (704), die derart ausgestaltet ist, dass sie zu einer Mehrzahl von Zeiten zwischen einer ersten Zeit und einer zweiten Zeit die Stärke einer Korrelation zwischen einer Position von jedem aus einer Mehrzahl von Objekten, die in einem Raum angeordnet sind, und einer Position eines sich bewegenden Körpers als einen Grad einer Beziehung für jeden aus der Mehrzahl von Informationsteilen berechnet, wobei der sich bewegende Körper sich in dem Raum bewegt;
eine Ähnlichkeitsberechnungseinheit (708) auf der Grundlage des Grades der Beziehung für jeden aus der Mehrzahl von Informationsteilen, derart ausgestaltet, dass sie Ähnlichkeiten für alle Paare aus der Mehrzahl von Informationsteilen zu der Mehrzahl von Zeiten berechnet, um die berechneten Ähnlichkeiten für jedes aus allen Paaren aus der Mehrzahl von Informationsteilen zu integrieren und die integrierten Ähnlichkeiten zu berechnen; und
eine Klassifizierungseinheit (710), die derart ausgestaltet ist, dass sie die Mehrzahl von Informationsteilen auf der Grundlage der integrierten Ähnlichkeiten gruppiert.

2. Gruppierungsvorrichtung nach Anspruch 1, die ferner eine Objektdaten-Speichereinheit (706) aufweist, die derart ausgestaltet ist, dass in ihr Informationen über eine Mehrzahl von Objekten und die Position einer Position eines Hindernisses gespeichert werden, das in dem Raum vorhanden ist, in dem die Mehrzahl von Objekten angeordnet ist, und das die Bewegung des sich bewegenden Körpers verhindert, wobei
die Beziehungsberechnungseinheit (704) derart ausgestaltet ist, dass sie die Stärke der Korrelation zwischen einer Position von jedem aus einer Mehrzahl von Objekten, die in einem Raum angeordnet sind, und einer Position des sich bewegenden Körpers berechnet, der sich in dem Raum bewegt, auf der Grundlage einer Strecke einer Route, die von dem sich bewegenden Körper in dem Raum genutzt wird, und die nicht durch das Hindernis führt.

3. Gruppierungsvorrichtung nach Anspruch 1 oder 2, wobei
die Beziehungsberechnungseinheit (704) derart ausgestaltet ist, dass sie eine Beziehung durch Verwenden einer monoton fallenden Funktion F(x) berechnet,
unter Verwendung von

$$r_k = F(|X_k - Y|) \quad (17),$$

wobei
$X_k$ eine Position von einem aus der Mehrzahl von Objekten und Y eine Position des sich bewegenden Körpers ist.

4. Gruppierungsvorrichtung nach Anspruch 2, wobei
die Beziehungsberechnungseinheit (704) derart ausgestaltet ist, dass sie die Stärke einer Korrelation zwischen einem Informationsteil aus der Mehrzahl von Informationsteilen, positioniert in $X_k$, und dem in Y positionierten sich bewegenden Körper berechnet, unter Verwendung von

$$r_k = \phi(X_k) \quad (19)$$

erlangt durch Verwenden einer Lösung φ der Laplace-Gleichung,

$$\Delta\phi(x) = \delta(x - Y) \quad (18),$$

die die Grenzbedingung δ = 0 auf der Oberfläche des Hindernisses erfüllt.

5. Gruppierungsvorrichtung nach einem der Ansprüche 1 bis 4, wobei:

die Beziehungsberechnungseinheit (704) derart ausgestaltet ist, dass sie den Grad der Beziehung unter Berücksichtigung der Ausrichtung von jedem aus der Mehrzahl von Informationsteilen und der Ausrichtung des sich bewegenden Körpers berechnet.

6. Gruppierungsvorrichtung nach einem der Ansprüche 1 bis 5, wobei:

die Beziehungsberechnungseinheit (704) derart ausgestaltet ist, dass sie den Grad der Beziehung durch Verwenden einer Funktion berechnet, die maximal ist, wenn jeder aus der Mehrzahl von Informationsteilen und der sich bewegende Körper mit einem Unterschied von 180° zueinander ausgerichtet sind.

7. Gruppierungsvorrichtung nach einem der Ansprüche 1 bis 6, wobei:

die Klassifizierungseinheit (710) derart ausgestaltet ist, dass sie eine hierarchische Gruppierung durch Erstellen einer Mehrzahl von Schwellenwerten, die sich voneinander unterscheiden, für die integrierten Ähnlichkeiten durchführt.

8. Gruppierungsvorrichtung nach einem der Ansprüche 1 bis 7, wobei:

die Klassifizierungseinheit (710) derart ausgestaltet ist, dass sie eine Ähnlichkeit C(i, j) zwischen in $X_i$ positionierten Informationen und in $X_j$ positionierten Informationen aus der Mehrzahl von Informationsteilen durch Verwenden einer Funktion derart berechnet, dass unter Verwendung einer Beziehung $r_i$ zwischen den in $X_i$ positionierten Informationen und dem in Y positionierten sich bewegenden Körper und einer Beziehung $r_j$ zwischen den in $X_j$ positionierten Informationen und dem in Y positionierten sich bewegenden Körper
(C1) $C_{(i,j)} = C_{(j,i)}$ ist, das heißt, symmetrisch in Bezug auf einen wechselseitigen Austausch der Indizes i und j ist,
(C2) $C_{(i,j)} = 0$ ist, wenn entweder die Beziehung $r_i$ oder die Beziehung $r_j$ Null ist, und
(C3) der Wert größer ist, wenn die Werte der Beziehungen $r_i$ und $r_j$ größer sind, und die Differenz zwischen den Beziehungen $r_i$ und $r_j$ kleiner ist.

9. Gruppierungssystem, das umfasst:

einen Sensor (600), der derart ausgestaltet ist, dass er zu einer Mehrzahl von Zeiten zwischen einer ersten Zeit und einer zweiten Zeit eine Position eines sich bewegenden Körpers misst, der sich in einem Raum bewegt, in dem eine Mehrzahl von Objekten angeordnet ist, wobei jedes aus der Mehrzahl von Objekten mit einem entsprechenden aus einer Mehrzahl von Informationsteilen versehen ist;
eine Beziehungsberechnungseinheit (704), die derart ausgestaltet ist, dass sie die Stärke einer Korrelation zwischen einer Position von jedem aus einer Mehrzahl von Objekten, die in einem Raum angeordnet sind, und der Position des sich bewegenden Körpers als einen Grad einer Beziehung für jeden aus der Mehrzahl von Informationsteilen berechnet, wobei der sich bewegende Körper sich in dem Raum bewegt;
eine Ähnlichkeitsberechnungseinheit (708) auf der Grundlage des Grades der Beziehung für jeden aus der Mehrzahl von Informationsteilen, derart ausgestaltet, dass sie Ähnlichkeiten für alle Paare aus der Mehrzahl von Informationsteilen zu der Mehrzahl von Zeiten berechnet, um die berechneten Ähnlichkeiten für jedes aus allen Paaren aus der Mehrzahl von Informationsteilen zu integrieren und die integrierten Ähnlichkeiten zu berechnen; und
eine Klassifizierungseinheit (710), die derart ausgestaltet ist, dass sie die Mehrzahl von Informationsteilen auf der Grundlage der integrierten Ähnlichkeiten gruppiert.

10. Gruppierungsverfahren, das durch einen Computer ausführbar ist, wobei das Gruppierungsverfahren umfasst:

Berechnen, zu einer Mehrzahl von Zeiten zwischen einer ersten Zeit und einer zweiten Zeit, der Stärke einer Korrelation zwischen einer Position von jedem aus einer Mehrzahl von Objekten, die in einem Raum angeordnet sind, und einer Position eines sich bewegenden Körpers als einen Grad einer Beziehung für jeden aus der Mehrzahl von Informationsteilen, wobei der sich bewegende Körper sich in dem Raum bewegt;
auf der Grundlage des Grades der Beziehung für jeden aus der Mehrzahl von Informationsteilen, Berechnen von Ähnlichkeiten für alle Paare aus der Mehrzahl von Informationsteilen zu der Mehrzahl von Zeiten, Integrieren der berechneten Ähnlichkeiten für jedes aus allen Paaren aus der Mehrzahl von Informationsteilen und Berechnen integrierter Ähnlichkeiten; und
Gruppieren der Mehrzahl von Informationsteilen auf der Grundlage der integrierten Ähnlichkeiten.

11. Programm, um einen Computer zum Ausführen eines Prozesses zu veranlassen, der umfasst:

Berechnen, zu einer Mehrzahl von Zeiten zwischen einer ersten Zeit und einer zweiten Zeit, der Stärke einer Korrelation zwischen einer Position von jedem aus einer Mehrzahl von Objekten, die in einem Raum angeordnet sind, und einer Position eines sich bewegenden Körpers als einen Grad einer Beziehung für jeden aus der Mehrzahl von Informationsteilen, wobei der sich bewegende Körper sich in dem Raum bewegt;
auf der Grundlage des Grades der Beziehung für jeden aus der Mehrzahl von Informationsteilen, Berechnen von Ähnlichkeiten für alle Paare aus der Mehrzahl von Informationsteilen zu der Mehrzahl von Zeiten, Integrieren der berechneten Ähnlichkeiten für jedes aus allen Paaren aus der Mehrzahl von Informationsteilen und Berechnen integrierter Ähnlichkeiten; und
Gruppieren der Mehrzahl von Informationsteilen auf der Grundlage der integrierten Ähnlichkeiten.

**Revendications**

1. Appareil de regroupement comprenant :

   une unité de calcul de relation (704) conçue pour calculer, à une pluralité de moments entre un premier temps et un deuxième temps, la force de corrélation entre une position de chacun de la pluralité d'objets disposés dans un espace et une position d'un corps en mouvement en tant que niveau de relation pour chacune de la pluralité d'éléments d'informations, le corps en mouvement se déplaçant à l'intérieur de l'espace ;
   une unité de calcul de similarité (708), sur la base du niveau de relation pour chacune de la pluralité d'éléments d'informations, conçue pour calculer des similarités pour toutes les paires de la pluralité d'éléments d'informations à la pluralité de moments, pour intégrer les similarités calculées pour chacune de toutes les paires de la pluralité d'éléments d'informations et pour calculer des similarités intégrées ; et
   une unité de classification (710) conçue pour regrouper la pluralité d'éléments d'informations sur la base des similarités intégrées.

2. Appareil de regroupement selon la revendication 1, comprenant en outre une unité de stockage de données d'objets (706) qui est conçue pour stocker des informations sur une pluralité d'objets et la position d'une position d'un obstacle qui existe dans l'espace dans lequel la pluralité d'objets sont disposés et qui empêche le mouvement du corps en mouvement, dans lequel
   l'unité de calcul de relations (704) est conçue pour calculer la force de la corrélation entre une position de chacun d'une pluralité d'objets disposés dans un espace et une position du corps en mouvement qui se déplace à l'intérieur de l'espace, sur la base d'une distance d'un itinéraire qui est utilisé par le corps en mouvement se déplaçant à l'intérieur de l'espace et qui ne passe pas par l'obstacle.

3. Appareil de regroupement selon la revendication 1 ou 2, dans lequel l'unité de calcul de relations (704) est conçue pour calculer une relation à l'aide d'une fonction à décroissance monotone F(x), en utilisant

$$r_k = F(|X_k - Y|) \ (17),$$

   $X_k$ étant une position de l'un de la pluralité d'objets et Y étant une position du corps en mouvement.

4. Appareil de regroupement selon la revendication 2, dans lequel l'unité de calcul de relations (704) est conçue pour calculer la force de corrélation entre un élément d'information parmi la pluralité d'éléments d'informations, positionné dans $X_k$ et le corps en mouvement positionné en Y en utilisant

$$r_k = \phi(X_k) \ (19)$$

   obtenue à l'aide d'une solution φ de l'équation de Laplace,

$$\Delta\phi(x) = \delta \ (x - Y) \ (18),$$

   qui satisfait la condition limite φ = 0 sur la surface de l'obstacle.

5. Appareil de regroupement selon l'une des revendications 1 à 4, dans lequel
   l'unité de calcul de relations (704) est conçue pour calculer le niveau de relation en considérant l'orientation de chacun de la pluralité d'éléments d'informations et l'orientation du corps en mouvement.

6. Appareil de regroupement selon l'une des revendications 1 à 5, dans lequel
   l'unité de calcul de relations (704) est conçue pour calculer le niveau de relation à l'aide d'une fonction qui est au maximum lorsque chacun de la pluralité d'éléments d'informations et le corps en mouvement sont orientés à 180 degrés de différence l'un par rapport à l'autre.

7. Appareil de regroupement selon l'une des revendications 1 à 6, dans lequel
   l'unité de classification (710) est conçue pour effectuer un regroupement hiérarchique en préparant une pluralité de seuils qui sont différents les uns des autres pour les similarités intégrées.

8. Appareil de regroupement selon l'une des revendications 1 à 7, dans lequel

l'unité de classification (710) est conçue pour calculer une similarité $C_{(i, j)}$ entre une information positionnée en $X_i$ et une information positionnée en $X_j$ parmi la pluralité d'éléments d'informations à l'aide d'une fonction de façon à ce que, en utilisant une relation $r_i$ entre l'information positionnée en $X_i$ et le corps en mouvement positionné en Y, et une relation $r_j$ entre l'information positionnée en $X_j$ et le corps en mouvement positionné en Y,

(C1) $C_{(i,j)} = C_{(j,i)}$ c'est-à-dire symétrique par rapport au changement des indices i et j,
(C2) $C_{(i,j)} = 0$ lorsque soit la relation $r_i$ soit la relation $r_j$ est égale à zéro et
(C3) la valeur soit supérieure lorsque les valeurs des relations $r_i$ et $r_j$ sont supérieures et la différence entre les relations $r_i$ et $r_j$ est plus petite.

9. Système de regroupement comprenant :

un capteur (600) conçu pour mesurer, à une pluralité de moments entre un premier temps et un deuxième temps, une position d'un corps en mouvement qui se déplace à l'intérieur d'un espace dans lequel une pluralité d'objets sont disposés, chacun de la pluralité d'objets étant muni d'un élément d'information correspondant d'une pluralité d'éléments d'informations ;
une unité de calcul de relations (704) conçue pour calculer la force de corrélation entre une position de chacun de la pluralité d'objets disposés dans un espace et la position du corps en mouvement en tant que niveau de relation pour chacun de la pluralité d'éléments d'informations, le corps en mouvement se déplaçant à l'intérieur de l'espace ;
une unité de calcul de similarité (708) sur la base du niveau de relation pour chacun de la pluralité d'éléments d'informations, conçue pour calculer des similarités pour toutes les paires de la pluralité d'éléments d'informations à la pluralité de moments, pour intégrer les similarités calculées pour chacune de toutes les paires de la pluralité d'éléments d'informations, et pour calculer des similarités intégrées ; et
une unité de classification (710) conçue pour regrouper la pluralité d'éléments d'informations sur la base des similarités intégrées.

10. Procédé de regroupement exécutable par un ordinateur, ce procédé de regroupement comprenant :

le calcul, à une pluralité de moments entre un premier temps et un deuxième temps, de la force de corrélation entre une position de chacun de la pluralité d'objets disposés dans un espace et une position d'un corps en mouvement en tant que niveau de relation pour chacun de la pluralité d'éléments d'informations, le corps en mouvement se déplaçant à l'intérieur de l'espace ;
sur la base du niveau de relation pour chacun de la pluralité d'éléments d'informations, le calcul de similarités pour toutes les paires de la pluralité d'éléments d'informations à la pluralité de moments, l'intégration des similarités calculées pour chacune de toutes les paires de la pluralité d'éléments d'informations et le calcul de similarités intégrées ; et
le regroupement de la pluralité d'éléments d'informations sur la base des similarités intégrées.

11. Programme permettant de faire en sorte qu'un ordinateur exécuter un processus, comprenant :

le calcul, à une pluralité de moments entre un premier temps et un deuxième temps, de la force de corrélation entre une position de chacun de la pluralité d'objets disposés dans un espace et une position d'un corps en mouvement en tant que niveau de relation pour chacun de la pluralité d'éléments d'informations, le corps en mouvement se déplaçant à l'intérieur de l'espace ;
sur la base du niveau de relation pour chacun de la pluralité d'éléments d'informations, le calcul de similarités pour toutes les paires de la pluralité d'éléments d'informations à la pluralité de moments, l'intégration des similarités calculées pour chacune de toutes les paires de la pluralité d'éléments d'informations et le calcul de similarités intégrées ; et
le regroupement de la pluralité d'éléments d'informations sur la base des similarités intégrées.

F I G. 1

F I G .  2

FIG. 3

F I G. 4

FIG. 5A

F I G. 5 B

F I G. 6

F I G. 7

F I G. 8

F I G. 9 A

F I G. 9 B

FIG. 10A

F I G. 1 0 B

1.0

RELATIONSHIP$r_k$

DISTANCE$d_k$

F I G. 1 1

EP 2 998 879 B1

F I G. 1 2

F I G.　1 3

F I G. 1 4

|   | A | B | C | D |
|---|---|---|---|---|
| A | 0 | 0.9 | 0.2 | 0.3 |
| B | 0.9 | 0 | 0.3 | 0.1 |
| C | 0.2 | 0.3 | 0 | 0.7 |
| D | 0.3 | 0.1 | 0.7 | 0 |

FIG. 15

F I G. 1 6

EP 2 998 879 B1

FIG. 17

|   | A | B | C | D | E | F | G | H |
|---|---|---|---|---|---|---|---|---|
| A | · | 0.07 | 0.31 | 0 | 0 | 0 | 0 | 0 |
| B | · | · | 0.21 | 0 | 0 | 0 | 0 | 0.001 |
| C | · | · | · | 0 | 0 | 0 | 0 | 0 |
| D | · | · | · | · | 0.33 | 0.22 | 0.05 | 0.20 |
| E | · | · | · | · | · | 0.32 | 0.12 | 0.23 |
| F | · | · | · | · | · | · | 0.11 | 0.12 |
| G | · | · | · | · | · | · | · | 0.33 |
| H | · | · | · | · | · | · | · | · |

F I G. 1 8

FIG. 19A

F I G.  1 9 B

F I G. 2 0

800
COMPUTER

802 MPU

804 ROM

806 RAM

808 HARD DISK DEVICE

810 INPUT DEVICE

812 DISPLAY

814 INTERFACE DEVICE

816 RECORDING MEDIUM DRIVING DEVICE

818 PORTABLE RECORDING MEDIUM

820

FIG. 21

START

t=0 — S102

t=t+△t — S104

MEASURE
(POSITION AND DIRECTION) — S106

CALCULATE A RELATIONSHIP — S108

UPDATING OF INTEGRATED
SIMILARITY SET

GENERATE A SIMILARITY SET — S110

ADD TO THE EXISTING
SIMILARITY SET — S112

NORMALIZE — S114

CLASSIFY
(CREATE A LINKAGE GRAPH) — S116

S118

IS THE
TERMINATION CONDITION
SATISFIED?

NO

YES

TERMINATE

F I G. 2 2

**EP 2 998 879 B1**

**REFERENCES CITED IN THE DESCRIPTION**

**Patent documents cited in the description**

- JP 2012103963 A
- US 2013080457 A1
- US 2012149309 A1
- US 2011021214 A1